# EUROPEAN PATENT APPLICATION

(11) **EP 4 417 493 A1**
(43) Date of publication of application: **21.08.2024**
(21) Application number: 22895396.4
(22) Date of filing: 27.10.2022
(51) Int. Cl.: B62D 25/20, B60K 1/04

(54) **BODY LOWER STRUCTURE AND SIDE SILL STRUCTURE FOR AUTOMOTIVE VEHICLE**

(30) Priority: 18.11.2021 JP 2021187450; 08.09.2022 JP 2022143269; 08.09.2022 JP 2022143279
(71) Applicant: JFE Steel Corporation, Tokyo 100-0011 (JP)
(72) Inventor: ISHIKAWA, Toshiharu, Tokyo 100-0011 (JP); HIGAI, Kazuhiko, Tokyo 100-0011 (JP); SHIOZAKI, Tsuyoshi, Tokyo 100-0011 (JP)
(74) Representative: Hoffmann Eitle
(86) International application number: PCT/JP2022/040155
(87) International publication number: WO 2023/090112

(57) **Abstract**

A lower structure of automotive body of an automobile according to the present invention is a lower structure of automotive body of an automobile including a specific component including a side sill 1, in which the side sill 1 has a structure in which a closed sectional space 3 is partitioned into two closed sectional spaces 3a and 3b in a vehicle width direction by a partition member 2, and the side sill further has an impact absorbing structure A constituted by a pair of sectionally groove-shaped members 4a and 4b that are joined to the partition member 2 in a state where the partition member 2 is sandwiched from both sides in the closed sectional spaces 3a and 3b and form closed sectional spaces 5a and 5b respectively with the partition member 2, and bulkheads 6 that are provided in the closed sectional spaces 5a and 5b along the vehicle width direction to partition the closed sectional spaces 5a and 5b. The bulkheads 6 in the closed sectional spaces 5a and 5b are provided under a predetermined arrangement condition, and each bulkhead 6 is joined to at least the sectionally groove-shaped members 4a and 4b.

## Description

### Field

The present invention relates to a lower structure of automotive body including a side sill structure on a side of an automotive body of an automobile, and particularly relates to a lower structure of automotive body suitable for an automobile including a battery module below a floor panel between both side sills.

### Background

In general, an automobile loaded with a large capacity battery such as a battery electric vehicle (BEV) or a plug-in hybrid electric vehicle (PHEV) (hereinafter, collectively referred to as "battery powered vehicle") includes a battery module below a floor panel. The battery module includes a battery cell (battery pack) and a battery case for storing the battery cell. In general, a battery case has a role of protecting a battery cell from an impact load, and a member having high rigidity and high proof stress is used. A member having a function of absorbing energy by deformation of the member itself is disposed around the battery case. In particular, in a case of side impact, the side sill absorbs energy of an impact load from the side of the automotive body, and the remaining load is supported by the floor cross member or the battery case side member. At this time, if the amount of deformation required for the energy absorption of the side sill is small, the energy absorbing portion can be reduced, and the volume of the battery module can be expanded instead, leading to an increase in a cruising distance. From the above, there is a demand for a lightweight side sill structure having excellent impact energy absorption property and a lower structure of automotive body including the side sill structure.

A technique for enhancing rigidity of a side sill and enhancing energy absorption property at the time of side impact has been proposed. Specifically, Patent Literature 1 discloses a technique in which a bulkhead along a vehicle width direction is provided inside a side sill (closed sectional space) of a closed cross section structure forming a vehicle side surface of an automobile to prevent cross-section collapsing of the side sill at the time of side impact of the side sill. A flange portion is formed on the outer periphery of the bulkhead and is welded and fixed to a reinforcement in the side sill. In addition, Patent Literatures 2 and 3 disclose a technique for preventing cross-section collapsing of the side sill at the time of side impact in a structure including a partition member that vertically passes through the inside of the side sill, in which the closed sectional space in the side sill is partitioned into two closed sectional spaces in the vehicle width direction by the partition member. Specifically, in these techniques, a plurality of bulkheads along the vehicle width direction is disposed in a closed sectional space in the side sill, and the bulkhead and the partition member are combined to prevent cross-section collapsing of the side sill at the time of side impact. In these techniques, the partition member is provided to prevent the side sill from opening in the vertical direction and cross-section collapsing at the time of side impact. In Patent Literature 2, the bulkhead is disposed only in one space sandwiching the partition member in the closed sectional space in the side sill. On the other hand, in Patent Literature 3, the bulkheads are disposed on both sides of the partition member in the closed sectional space in the side sill.

Further, Patent Literature 4 discloses a technique in which impact absorption members having a hat-shaped cross section are disposed on both sides of a partition member (inside and outside of the partition member) in a structure including the partition member that vertically passes through the inside of the side sill, in which the closed sectional space in the side sill is partitioned into two closed sectional spaces in the vehicle width direction by the partition member. In addition, Patent Literature 5 discloses a technique in which a plurality of ridge line sections along a vehicle width direction is held at intervals in a closed sectional space in a side sill, and an impact absorption member having a wave shape that rises and falls along a front-rear direction of an automotive body is disposed, thereby suppressing local deformation while maintaining impact absorption capacity.

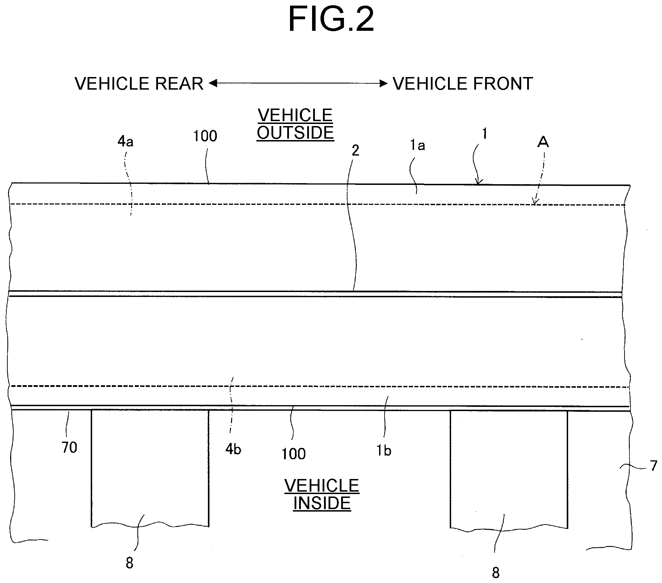

In addition, Patent Literature 6 discloses, as a system for reinforcing a cavity in a vehicle frame, a structural reinforcement system (FIG. 2) including a rigid carrier including a plurality of longitudinal ribs interconnected to a plurality of transverse ribs and providing structural reinforcement in a cavity wall, an insertion member corresponding to a stiffener, and a joining material joining the cavity wall and the carrier. In addition, Patent Literature 7 discloses a technology in which, in a side sill including a hat member having a top plate, two vertical walls, and two flange portions, and a closing plate, a plurality of groove portions extending in a direction perpendicular to a longitudinal direction of the hat member is provided in the vertical wall of the hat member, so that a load required for deformation of the side sill at the time of a side impact of an automobile is increased, and high energy absorption efficiency can be obtained.

### Citation List

### Patent Literature

Patent Literature 1: JP H10-59218 A
Patent Literature 2: JP 2009-202620 A
Patent Literature 3: JP 2013-49378 A
Patent Literature 4: JP 2017-226353 A
Patent Literature 5: JP 2021-146973 A
Patent Literature 6: JP 2011-530450 A
Patent Literature 7: JP 6703322 B2

### Summary

### Technical Problem

Since the technique disclosed in Patent Literature 1 has a structure in which the bulkhead is long in the vehicle width direction and is easily buckled, there is a problem that buckling of the bulkhead easily occurs at the time of side impact, and when buckling of the bulkhead starts to occur, cross-section collapsing of the side sill occurs. Therefore, appropriate impact energy absorption property cannot be obtained. Further, as in the techniques disclosed in Patent Literatures 2 and 3, in a side sill having a partition member, even in a case where a bulkhead is disposed in a closed sectional space in the side sill, sufficient impact energy absorption property cannot be obtained. In the technique disclosed in Patent Literature 2, since the bulkhead is disposed only in one closed sectional space sandwiching the partition member, the bulkhead has only a function of maintaining the cross-sectional shape of the one closed sectional space, and sufficient impact energy absorption property cannot be obtained. In addition, even in a case where the bulkheads are disposed in both spaces sandwiching the partition member as in the technique disclosed in Patent Literature 3, the obtained impact energy absorption property are not sufficient.

Furthermore, in the technique disclosed in Patent Literature 3, it is necessary to provide slits in the partition member in order to insert the bulkhead, and in the case of installing a plurality of bulkheads in the longitudinal direction of the side sill, the installation interval of the bulkheads cannot be lengthened in order to avoid a decrease in the strength of the partition member due to the provision of the slits. For this reason, there is a problem that the number of bulkheads installed increases, leading to an increase in weight. Further, as in Patent Literature 4, in the side sill having the partition member, sufficient impact energy absorption property cannot be obtained simply by arranging the impact absorption members having the hat-shaped cross section on both sides of the partition member (inside and outside of the partition member). In addition, since the technique disclosed in Patent Literature 5 can uniformly transmit the impact load at the time of side impact while dispersing the impact load in the cross section perpendicular to the vehicle width direction, high impact energy absorption property can be obtained. However, in the side sill inner reinforcing member having a constant cross section in the vehicle front-rear direction, since the reinforcing member is also present in a portion that does not need to be reinforced, the weight may be excessive.

In addition, in the technique disclosed in Patent Literature 6, the thickness and the interval of the transverse rib and the longitudinal rib are 2 to 8 mm and 20 to 40 mm, respectively, and there is a possibility that the weight becomes excessive since a reinforcing member is also present in a portion that does not need to be reinforced similarly to Patent Literature 5. In addition, in the technique disclosed in Patent Literature 7, since a plurality of groove portions is provided in the vertical wall of the hat member, when an impact load is input from the outside of the vehicle in the vehicle width direction, the vertical wall is easily deformed into a bellows-shaped shape, and as a result, the amount of deformation of the side sill toward the inside in the vehicle width direction increases. Therefore, in a case where a large load is input to the battery module, the battery module may be deformed, and the battery may not be protected. Therefore, it has been required to reduce a load input to the battery case due to deformation of the side sill at the time of a side impact of an automobile (particularly, a battery powered vehicle) including a battery module below a floor panel between both side sills.

The present invention has been made to solve the above problems, and an object of the present invention is to provide a lower structure of automotive body and a side sill structure of an automobile capable of obtaining high impact energy absorption property with a small amount of impact deformation while suppressing an increase in weight due to a structural member in the lower structure of automotive body of the automobile including the side sill. In addition, another object of the present invention is to provide a lower structure of automotive body and a side sill structure of an automobile capable of reducing a load input to a battery module by deformation of the side sill.

### Solution to Problem

As a result of repeated studies to solve the above problems, the present inventors have found that the above problems can be solved by using a partition member that vertically passes a closed sectional space in a side sill and providing an impact absorbing structure having a specific structure in the closed sectional space. Specifically, the present inventors have found that, by providing an impact absorbing structure including a pair of sectionally groove-shaped members joined in a closed sectional space of a side sill with a partition member interposed therebetween from both sides and a plurality of bulkheads installed in two closed sectional spaces formed between the sectionally groove-shaped members and the partition member under predetermined conditions, the impact absorbing structure in which the members are structurally integrated, high energy absorption property can be obtained while an increase in weight by the structural members is suppressed. In addition, the present inventors have found that a load input to the battery module can be reduced by deformation of the side sill by extending one of the inner side portion and the outer side portion of the lower portion of the impact absorbing structure downward from the other or forming a recessed portion in one of the inner side portion and the outer side portion so as to face the inner surface of the side sill. The present invention has been made based on such findings, and the gist thereof is as follows.

A lower structure of automotive body of an automobile according to the present invention includes: side sills (1) arranged on both sides of an automotive body lower portion along a vehicle longitudinal direction; a floor cross member (8) arranged between the side sills (1) and having both side portions fixed to upper portions of the side sills (1); and a battery case (9) arranged below the floor cross member (8) and having both side portions facing lower portions of the side sills (1), wherein each of the side sills (1) includes a partition member (2) that vertically passes a closed sectional space (3) in the side sill (1), and has a structure in which the closed sectional space (3) is partitioned into two closed sectional spaces (3a) and (3b) in a vehicle width direction by the partition member (2), the side sill (1) further includes an impact absorbing structure (A) including: a pair of sectionally groove-shaped members (4a) and (4b) joined to the partition member (2) in a state where the partition member (2) is sandwiched from both sides in the closed sectional spaces (3a) and (3b), and forming closed sectional spaces (5a) and (5b) with the partition member (2), respectively; and bulkheads (6) provided at a plurality of positions spaced apart from each other in a vehicle front-rear direction in the closed sectional spaces (5a) and (5b), each of the bulkheads (6) being provided in each of the closed sectional spaces (5a) and (5b) along the vehicle width direction to partition the closed sectional spaces (5a) and (5b), in the impact absorbing structure (A), the bulkhead (6) in the closed sectional space (5a) and the bulkhead (6) in the closed sectional space (5b) are provided to face each other in the vehicle width direction with the partition member (2) interposed therebetween, and each bulkhead (6) is joined to at least the sectionally groove-shaped member (4a) or the sectionally groove-shaped member (4b), and in an upper portion of the impact absorbing structure (A), an inner side portion and an outer side portion face each other across the partition member (2), and are positioned on a horizontal extension of the floor cross member (8) in the vehicle width direction.

Each of the bulkheads (6) may include: bulkheads (6ₓ) provided in a region within a width of the floor cross member in the vehicle front-rear direction; and a bulkhead (6_{y}) provided in a region outside the width of the floor cross member, the bulkheads (6ₓ) may be provided at least two positions in the region within the width of the floor cross member in the vehicle front-rear direction, and the bulkhead (6_{y}) may be provided at least one position in the region outside the width of the floor cross member, and w1 < w2 may be satisfied, where w1 represents an interval between two adjacent bulkheads (6ₓ), and w2 represents an interval between the bulkhead (6ₓ) and the bulkhead (6_{y}) adjacent to the bulkhead (6ₓ).

At least a part of bulkheads (6_{y}) may be formed by a bulkhead set constituted by two or more adjacent bulkheads.

Each of the bulkheads (6) may be joined to the sectionally groove-shaped member (4a) or the sectionally groove-shaped member (4b) and the partition member (2).

In a lower portion of the impact absorbing structure (A), one of the inner side portion and the outer side portion sandwiching the partition member (2)may extend downward from another one, and at least a portion (e) extending in the downward direction in the lower portion of the impact absorbing structure (A) may be positioned on a horizontal extension of the battery case (9) in the vehicle width direction.

The lower portion of the impact absorbing structure (A) may be positioned on a horizontal extension of the battery case (9) in the vehicle width direction, and a recessed portion (c) may be formed in one of the inner side portion and the outer side portion with the partition member (2) interposed therebetween in a lower region or a region including the lower portion in a height direction of the impact absorbing structure (A) so as to face the inner surface of the side sill (1).

A vertical surface portion (40) of each of the sectionally groove-shaped members (4a) and (4b) and a vertical surface portion (100) of the side sill (1) facing the vertical surface portion may be any one of: (i) directly joined or abutted; (ii) joined or abutted with another member interposed therebetween; and (iii) opposed to each other with a predetermined gap therebetween without being joined or abutted.

A metal sheet constituting the impact absorbing structure (A) may have a yield strength equal to or less than a yield strength of a metal sheet constituting the floor cross member, and a tensile strength equal to or more than 500 MPa-class.

A side sill structure for an automobile according to the present invention includes: a partition member (2) that vertically passes a closed sectional space (3) in a side sill (1), the closed sectional space (3) being partitioned into two closed sectional spaces (3a) and (3b) in a vehicle width direction by the partition member (2), wherein the side sill structure for the automobile includes an impact absorbing structure (A) including: a pair of sectionally groove-shaped members (4a) and (4b) joined to the partition member (2) in a state where the partition member (2) is sandwiched from both sides in the closed sectional spaces (3a) and (3b), and forming closed sectional spaces (5a) and (5b) with the partition member (2), respectively; and bulkheads (6) provided at a plurality of positions spaced apart from each other in a vehicle front-rear direction in the closed sectional spaces (5a) and (5b), each of bulkheads(6) being provided in each of the closed sectional spaces (5a) and (5b) along the vehicle width direction to partition the closed sectional spaces (5a) and (5b), and in the impact absorbing structure (A), the bulkhead (6) in the closed sectional space (5a) and the bulkhead (6) in the closed sectional space (5b) are provided to face each other in the vehicle width direction with the partition member (2) interposed therebetween, and each bulkhead (6) is joined to at least the sectionally groove-shaped member (4a) or the sectionally groove-shaped member (4b).

Each of the bulkheads (6) may be joined to the sectionally groove-shaped member (4a) or the sectionally groove-shaped member (4b) and the partition member (2).

Each of the bulkheads (6) may include: bulkheads (6ₓ) provided in a region within a width of the floor cross member in the vehicle front-rear direction; and a bulkhead (6_{y}) provided in a region outside the width of the floor cross member, the bulkheads (6ₓ) may be provided at least two positions in the region within the width of the floor cross member in the vehicle front-rear direction, and the bulkhead (6_{y}) may be provided at least one position in the region outside the width of the floor cross member, and w1 < w2 may be satisfied, where w1 represents an interval between two adjacent bulkheads (6ₓ), and w2 represents an interval between the bulkhead (6ₓ) and the bulkhead (6_{y}) adjacent to the bulkhead (6ₓ).

At least a part of bulkheads (6_{y}) may be formed by a bulkhead set constituted by two or more adjacent bulkheads.

The interval w2 may be 254 mm or less.

A vertical surface portion (40) of each of the sectionally groove-shaped members (4a) and (4b) and a vertical surface portion (100) of the side sill (1) facing the vertical surface portion may be any one of: (i) directly joined or abutted; (ii) joined or abutted with another member interposed therebetween; and (iii) opposed to each other with a predetermined gap therebetween without being joined or abutted.

A metal sheet constituting the impact absorbing structure (A) may have a yield strength equal to or less than a yield strength of a metal sheet constituting the floor cross member.

A metal sheet constituting the impact absorbing structure (A) may have a tensile strength equal to or more than 500 MPa-class.

A bead (60) may be formed in the bulkhead (6).

In the impact absorbing structure (A), one of an inner side portion and an outer side portion sandwiching the partition member (2) may extend in a vehicle height direction more than the other.

The impact absorbing structure (A) may be formed with a recessed portion (c) facing an inner surface of the side sill (1).

### Advantageous Effects of Invention

In the lower structure of automotive body and the side sill structure of the automobile of the present invention, a partition member 2 that vertically passes through the closed sectional space 3 in a side sill 1 is used, and the impact absorbing structure A having a specific structure is provided in the closed sectional space 3. Therefore, high impact energy absorption property can be obtained with a small amount of impact deformation. For this reason, in a case where the present invention is applied to an automobile including a battery module between both side sills like a battery powered vehicle, there is an advantage that the space required for energy absorption can be reduced and the volume of the battery module can be expanded. In addition, since the impact absorbing structure A can obtain high bending stiffness with the minimum necessary components, an increase in weight of the automotive body due to the components can also be suppressed. Further, in the lower structure of automotive body and the side sill structure of the automobile of the present invention, with respect to the lower portion of the impact absorbing structure A, by extending one of the inner side portion and the outer side portion below the other, or forming the recessed portion c in one of the inner side portion and the outer side portion so as to face the inner surface of the side sill 1, it is possible to reduce the load input to the battery module due to the deformation of the side sill. Therefore, deformation of the battery module due to the impact can be more appropriately prevented.

### Brief Description of Drawings

FIG. 1 schematically illustrates an embodiment of a lower structure of automotive body of the present invention, and is a longitudinal cross-sectional view in a vehicle width direction of a lower structure of automotive body including a side sill (one structural portion of structural portions on both sides of the automotive body lower portion).
FIG. 2 is a plan view of a lower structure of automotive body (one structural portion of structural portions on both sides of the automotive body lower portion) including a side sill in the embodiment of FIG. 1.
FIG. 3 is a longitudinal cross-sectional view of the side sill structure in the vehicle width direction, partially illustrating only the side sill structure in the embodiment of FIG. 1.
FIG. 4 is a cross-sectional view taken along line IV-IV in FIG. 3.
FIG. 5 is a component development view of the side sill illustrated in FIG. 3.
FIG. 6 is an explanatory view illustrating a developed floor panel, a floor cross member, and a battery case disposed between both side sills in the lower structure of automotive body.
FIG. 7 schematically illustrates another embodiment of the side sill in the lower structure of automotive body of the present invention, and is a longitudinal cross-sectional view of the side sill in the vehicle width direction.
FIG. 8 is a diagram (cross-sectional view of the side sill) for explaining a width We of the impact absorbing structure A and a width Ws of the side sill 1 in the vehicle width direction with respect to the embodiment of FIG. 1.
FIG. 9 is an explanatory view illustrating an arrangement mode example of a bulkhead constituting a side sill in the lower structure of automotive body of the present invention.
FIG. 10 is a diagram for explaining a width wa of the floor cross member in the lower structure of automotive body of the present invention.
FIG. 11 is an explanatory view illustrating another arrangement mode example of the bulkhead constituting the side sill in the lower structure of automotive body of the present invention.
FIG. 12 schematically illustrates another embodiment of the side sill in the lower structure of automotive body of the present invention, and is a longitudinal cross-sectional view of the side sill in the vehicle width direction.
FIG. 13 schematically illustrates another embodiment of the lower structure of automotive body of the present invention, and is a longitudinal cross-sectional view in the vehicle width direction of the lower structure of automotive body including the side sill (one structural portion of the structural portions on both sides of the automotive body lower portion).
FIG. 14 is a diagram (cross-sectional view of the side sill) for explaining heights (thicknesses) Hₛₕₒᵣₜ and H_{long} of an inner side portion and an outer side portion of the impact absorbing structure A in a vehicle height direction with respect to the embodiment of FIG. 13.
FIG. 15 schematically illustrates another embodiment of the lower structure of automotive body of the present invention, and is a longitudinal cross-sectional view in the vehicle width direction of the lower structure of automotive body including the side sill (one structural portion of the structural portions on both sides of the automotive body lower portion).
FIG. 16 is a diagram (cross-sectional view of the side sill) for explaining a height (thickness) H in the vehicle height direction and a width W in the vehicle width direction of an inner side portion (or an outer side portion) of the impact absorbing structure A, and a height h in the vehicle height direction and a width (depth) w in the vehicle width direction of a recessed portion c formed in the inner side portion (or the outer side portion) with respect to the embodiment of FIG. 15.
FIG. 17 is an explanatory view illustrating a state of deformation in stages at the time of side pole impact in a horizontal cross section of the side sill in the lower structure of automotive body of the present invention.
FIGS. 18 are an explanatory view schematically illustrating state of deformation at the time of side pole impact in a longitudinal cross section in the vehicle width direction of the side sill in the lower structure of automotive body of the present invention.
FIG. 19 is a graph illustrating relationship between an impact object (pole) intrusion amount and absorbed energy when the side sill in the lower structure of automotive body of the present invention is deformed by the side pole impact illustrated in FIGS. 18.
FIG. 20 is an explanatory view illustrating a deformation mode and a strain distribution at the time of a side impact of the side sill in comparison between the second embodiment and the first embodiment of the lower structure of automotive body of the present invention.
FIG. 21 is a graph illustrating a comparison of a relationship between an impact object (pole) intrusion amount and absorbed energy when a side pole test is performed on the side sill of the second embodiment and the first embodiment illustrated in FIG. 20 under the condition of FIGS. 18 and the side sill is deformed by the side pole impact.
FIG. 22 is a diagram for explaining an input load to a battery case and a floor cross member at the time of side pole impact in the second embodiment of the lower structure of automotive body of the present invention.
FIG. 23 is a graph illustrating a contact reaction force generated in a battery case side member and a contact reaction force generated in a floor cross member at the time of a side pole impact in the second embodiment and the first embodiment of the lower structure of automotive body of the present invention.
FIG. 24 is an explanatory view illustrating a deformation mode and a strain distribution of a side sill at the time of a side impact in the third embodiment and the first embodiment of the lower structure of automotive body of the present invention in comparison.
FIG. 25 is a graph illustrating a comparison of a relationship between an impact object (pole) intrusion amount and absorbed energy when a side pole test is performed on the side sill of the third embodiment and the first embodiment illustrated in FIG. 24 under the condition of FIGS. 18 and the side sill is deformed by the side pole impact.
FIG. 26 is a diagram for explaining an input load to a battery case and a floor cross member at the time of side pole impact in the third embodiment of the lower structure of automotive body of the present invention.
FIG. 27 is a graph illustrating a contact reaction force generated in a battery case side member and a contact reaction force generated in a floor cross member at the time of a side pole impact in the third embodiment and the first embodiment of the lower structure of automotive body of the present invention.
FIG. 28 is an explanatory view illustrating a side sill and test conditions of a lower structure of automotive body of an invention example and a comparative example in an impact test of the first example.
FIG. 29-1 is a graph illustrating the relationship between the impact object (punch) intrusion amount, the reaction force from side-sill, and absorbed energy in an impact test of the first example (invention example).
FIG. 29-2 is a graph illustrating the relationship between the impact object (punch) intrusion amount, the reaction force from side-sill, and absorbed energy in an impact test of the first example (comparative example).
FIG. 30 is a graph illustrating absorbed energy at maximum penetration of an impact object (punch) in an impact test of the first example (invention example and comparative example).
FIG. 31-1 is an explanatory view illustrating a lower structure of automotive body and test conditions of an invention example including a side sill in an impact test of the second example.
FIG. 31-2 is an explanatory view illustrating a lower structure of automotive body and test conditions of an invention example including a side sill in an impact test of the second example.
FIG. 31-3 is an explanatory view illustrating a lower structure of automotive body and test conditions of an invention example including a side sill in an impact test of the second example.
FIG. 31-4 is an explanatory view illustrating a lower structure of automotive body and test conditions of an invention example including a side sill in an impact test of the second example.
FIG. 32 is a graph illustrating absorbed energy at the time of maximum penetration of an impact object in an impact test of the second example.
FIG. 33 is a graph illustrating a battery case contact reaction force in an impact test of the second example. Description of Embodiments

### <Basic Structure of Automotive Body Lower Portion>

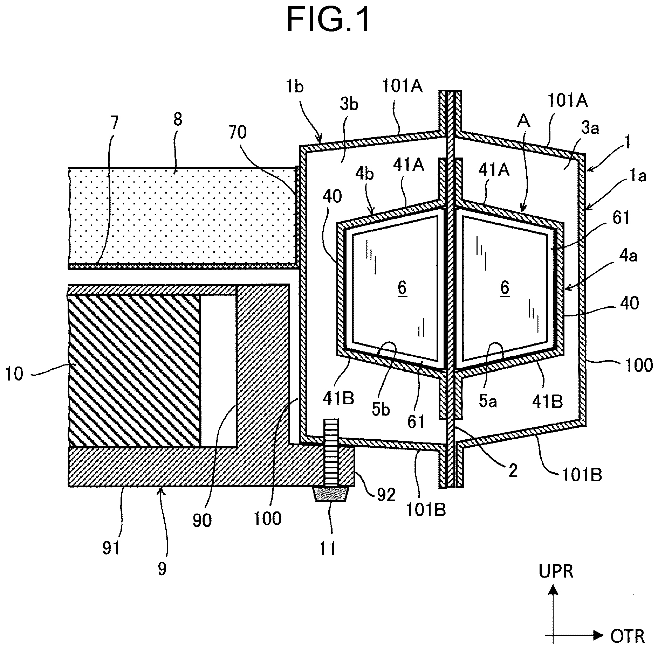

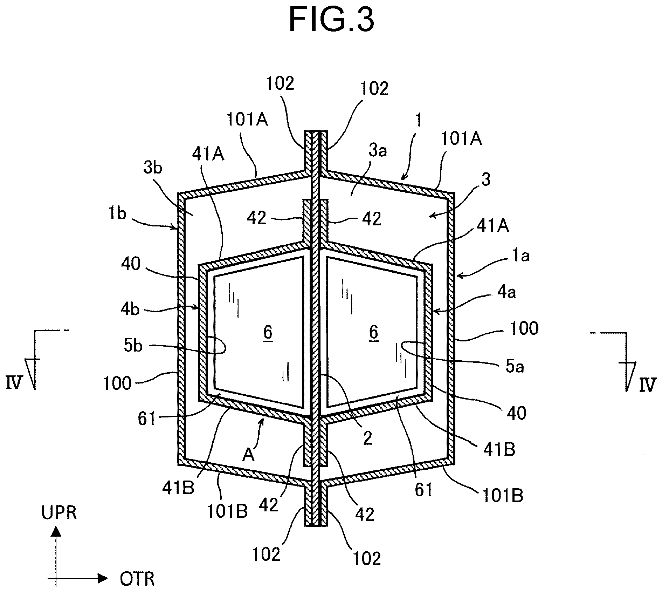

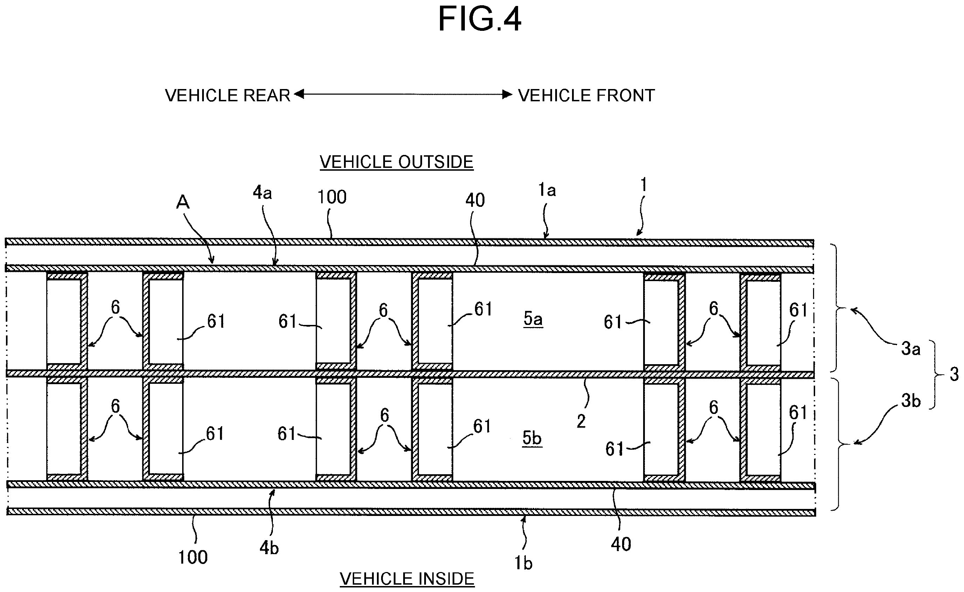

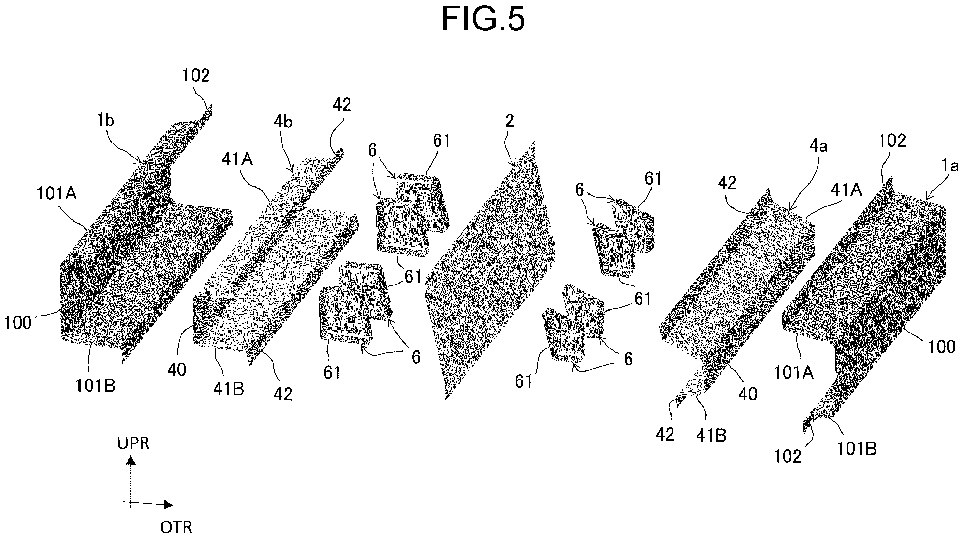

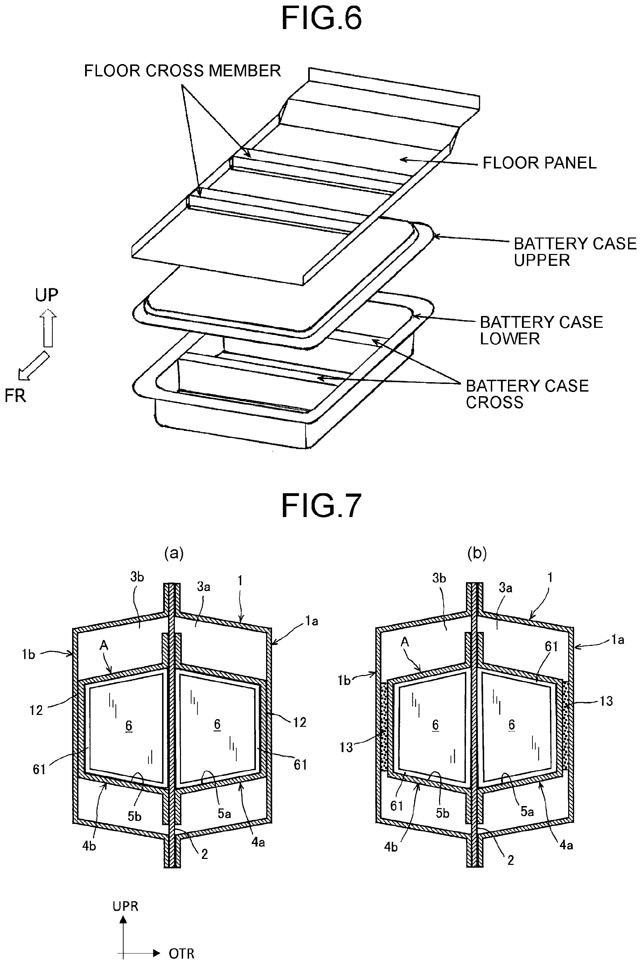

FIGS. 1 to 6 schematically illustrate an embodiment of a lower structure of automotive body of the present invention. Among them, FIG. 1 is a longitudinal cross-sectional view of a lower structure of automotive body including a side sill (one of structural portions on both sides of the automotive body lower portion) in the vehicle width direction, and FIG. 2 is a plan view of the lower structure of automotive body. In addition, FIGS. 3 to 5 partially illustrate only the side sill structure including the side sill, FIG. 3 is a longitudinal cross-sectional view of the side sill structure in the vehicle width direction, FIG. 4 is a cross-sectional view taken along line IV-IV in FIG. 3, and FIG. 5 is a component development view of the side sill. In addition, FIG. 6 is an explanatory view illustrating a developed floor panel, a floor cross member, and a battery case disposed between both side sills in the lower structure of automotive body. The lower structure of automotive body includes a side sill 1 arranged along the vehicle longitudinal direction on both sides of the automotive body lower portion, a floor cross member 8 arranged between the side sills 1 and having both side portions fixed to the upper portions of the side sills 1 (directly or fixed via a floor panel or the like), a battery case 9 arranged below the floor cross member 8 and having both side portions facing the lower portions of the side sills 1, and the like.

Hereinafter, a specific structure thereof will be described with reference to FIGS. 1 and 2. The side sill 1 is a frame structure member disposed on both sides of the automotive body lower portion, and a floor panel 7 is disposed between both the side sills 1. The floor panel 7 is joined to both side sills 1 (in FIG. 1, the upper portion of a vertical surface portion 100 of a side sill inner 1b) via both flange portions 70 thereof. Further, a floor cross member 8 which is a frame structure member along the vehicle width direction is disposed on the floor panel 7, and both ends of the floor cross member 8 are joined (fixed) to both side sills 1 (the upper portion of the vertical surface portion 100 of the side sill inner 1b in FIG. 1) via the floor panel 7 (flange portion 70). The floor cross members 8 are provided at a plurality of positions at predetermined intervals (for example, about 300 mm) in the vehicle front-rear direction. Note that the joining (fixing) between the floor panel 7 or the floor cross member 8 and the side sill 1 described above is usually performed by spot welding.

The battery case 9 accommodating a battery pack 10 is disposed below the floor panel 7 and the floor cross member 8, and a side portion (battery case side member 90) of the battery case 9 faces a lower portion of the side sill 1 (a lower portion of the vertical surface portion 100 of the side sill inner 1b) at a predetermined interval. A mounting flange portion 92 is connected to a bottom portion (battery case bottom plate 91) of the battery case 9 so as to protrude toward the side sill side. The battery case 9 is held by the side sill 1 by fastening the mounting flange portion 92 and the lower end of the side sill 1 (a lateral surface portion 101B on the lower side of the side sill inner 1b) with a fixing bolt 11. With such a structure, the load input to the side sill 1 at the time of side impact is input to both the floor cross member 8 and the battery case 9. As a result, it is possible to receive a load in a wide range, and the load input to the floor cross member 8 prior to the battery case 9 and input to the battery case 9 is reduced.

### <Basic Structure of Side Sill and Peripheral Portion Thereof>

The side sill 1 is configured by joining a side sill outer 1a and a side sill inner 1b, having groove-shaped cross sections, with a partition member 2 interposed therebetween. Therefore, the side sill structure has a structure in which the partition member 2 vertically passes through the closed sectional space 3 in the side sill 1, and the closed sectional space 3 is partitioned into two closed sectional spaces 3a and 3b in the vehicle width direction by the partition member 2. The side sill outer 1a and the side sill inner 1b constituting the side sill 1 are formed by forming a metal sheet. Each of the side sill outer 1a and the side sill inner 1b includes a main body portion having a groove-shaped cross section constituted by a vertical surface portion 100 and lateral surface portions 101A and 101B connected to upper and lower ends thereof, and flange portions 102 connected to both ends (end portions of lateral surface portions 101A and 101B) thereof. The vertical surface portion 100 may not be vertical and may have an appropriate inclination or curved surface. In addition, the lateral surface portions 101A and 101B do not have to be horizontal, and may have an appropriate inclination or curved surface. The partition member 2 is also constituted by a metal sheet, and may be formed by bending a flat sheet instead of a complete flat sheet.

The side sill outer 1a and the side sill inner 1b constitute the side sill 1 in which the inside becomes the closed sectional space 3 by overlapping and joining (usually joining by spot welding) the flange portions 102. In this case, the partition member 2 is interposed (sandwiched) between the side sill outer 1a and the side sill inner 1b, and the flange portions 102 of the side sill outer 1a and the side sill inner 1b are joined together with the upper and lower end portions of the partition member 2 sandwiched therebetween. As a result, the partition member 2 vertically passes through the closed sectional space 3 in the side sill 1, and the closed sectional space 3 is partitioned into two closed sectional spaces 3a and 3b in the vehicle width direction by the partition member 2. Upper and lower end portions of the partition member 2 are joined to upper and lower ends of the side sill main body (flange portions 102 of the side sill outer 1a and the side sill inner 1b). For this reason, a high impact strength that suppresses collapse of the side sill 1 due to opening of the cross section up and down (suppression of cross-section collapsing) at the time of the side impact is obtained, and this contributes to enhancement of the crash worthiness.

### <Impact Absorbing Structure A Included in Side Sill Structure>

In the side sill structure as described above, the present invention is characterized in that the partition member 2 vertically passing through the closed sectional space 3 in the side sill 1 is used, and the impact absorbing structure A having a specific structure is provided in the closed sectional space 3. That is, the present invention is characterized by providing a "an impact absorbing structure A including: a pair of sectionally groove-shaped members 4a and 4b joined to each other with a partition member 2 interposed therebetween from both sides; and a plurality of bulkheads 6 provided under predetermined conditions in two closed sectional spaces 5a and 5b formed between the sectionally groove-shaped members 4a and 4b and the partition member 2, the impact absorbing structure in which the members are structurally integrated". As a result, it is possible to obtain a side sill structure capable of obtaining high impact energy absorption property with a small impact deformation amount. In addition, since the impact absorbing structure A can obtain high bending stiffness with the minimum necessary components (in particular, the minimum number of bulkheads to be installed), an increase in weight of the automotive body due to the components can also be suppressed. The impact absorbing structure A is provided at least in a portion along the battery case side member 90 of the side sill in the vehicle front-rear direction. In the upper portion of the impact absorbing structure A, the inner side portion and the outer side portion face each other with the partition member 2 interposed therebetween, and are positioned on a horizontal extension of the floor cross member 8 (at least a portion of the floor cross member 8 in the height direction) in the vehicle width direction. That is, the upper portion of the impact absorbing structure A is aligned with the floor cross member 8 in the vehicle width direction via the side sill (side sill inner 1b).

The sectionally groove-shaped members 4a and 4b are formed by bending a metal sheet. Each of the sectionally groove-shaped members 4a and 4b includes a main body portion having a groove-shaped cross section including a vertical surface portion 40 and lateral surface portions 41A and 41B connected to upper and lower ends thereof, and a flange portion 42 connected to both ends (end portions of lateral surface portions 41A, 41B) thereof. The sectionally groove-shaped members 4a and 4b constitute a pressure receiving surface portion in which the vertical surface portion 40 receives a side impact load, and an energy absorbing surface portion in which the lateral surface portions 41A and 41B are deformed by the side impact load to absorb impact energy. The flange portion 42 may be formed (for example, it is intermittently formed at predetermined intervals) only on a part of the sectionally groove-shaped members 4a and 4b in the longitudinal direction. The sectionally groove-shaped members 4a and 4b are disposed along the vehicle front-rear direction (side sill longitudinal direction) in the closed sectional spaces 3a and 3b. The sectionally groove-shaped members 4a and 4b are joined (usually joining by spot welding) to the partition member 2 via the respective flange portions 42 in a state where the partition member 2 is sandwiched from both sides, and form closed sectional spaces 5a and 5b, respectively, with the partition member 2.

The bulkhead 6 is a member that partitions the closed sectional spaces 5a and 5b by being provided in each of the closed sectional spaces 5a and 5b along the vehicle width direction, and is provided at a plurality of positions spaced apart in the vehicle front-rear direction in the closed sectional spaces 5a and 5b. The bulkhead 6 is preferably provided so as to partition the entire cross sections in the vehicle width direction of the closed sectional spaces 5a and 5b. The bulkhead 6 cooperates with the partition member 2 at the time of side impact to suppress the cross-section collapsing of the sectionally groove-shaped members 4a and 4b, and the bulkhead 6 itself buckles and bends and collapses to absorb impact energy. The bulkhead 6 in the closed sectional space 5a and the bulkhead 6 in the closed sectional space 5b are provided to face each other in the vehicle width direction with the partition member 2 interposed therebetween (that is, at the same position in the vehicle front-rear direction). As a result, the function of maintaining the cross-sectional shapes of the outer side portion and the inner side portion of the impact absorbing structure A can be appropriately exhibited, and high impact energy absorption property can be obtained.

Each bulkhead 6 is formed by forming a metal sheet, and an outer peripheral edge portion thereof is joined to at least the sectionally groove-shaped member 4a or the sectionally groove-shaped member 4b, and more preferably, is also joined to the partition member 2. In the present embodiment, a flange portion 61 is formed on an outer peripheral edge of a main body (bulkhead portion) of the bulkhead 6, and is joined to the sectionally groove-shaped member 4a or the sectionally groove-shaped member 4b and the partition member 2 via the flange portion 61. Typically, this joining is performed by spot welding. The flange portion 61 may be formed (for example, intermittently formed at predetermined intervals) only on a part of the outer peripheral edge of the main body (bulkhead portion). The bulkheads 6 may be provided at equal intervals in the vehicle front-rear direction in the closed sectional spaces 5a and 5b, or may be provided such that wide intervals and narrow intervals alternate as illustrated in FIG. 4, for example. In the present invention, as will be described later, the bulkhead 6 is provided at different intervals for each specific region in the vehicle front-rear direction.

As described above, the impact absorbing structure A is installed in the closed sectional space 3 in the side sill 1 using the partition member 2. Then, the impact absorbing structure A has a structure in which a pair of sectionally groove-shaped members 4a and 4b joined to each other with the partition member 2 interposed therebetween from both sides and a bulkhead 6 provided in closed sectional spaces 5a and 5b formed inside the sectionally groove-shaped members 4a and 4b under a predetermined condition are integrated together with the partition member 2. In other words, the sectionally groove-shaped members 4a and 4b provided via the partition member 2 enclose the bulkheads 6 arranged at intervals in the vehicle front-rear direction, and these members are integrated. As a result, a high impact energy absorption property as described later is provided.

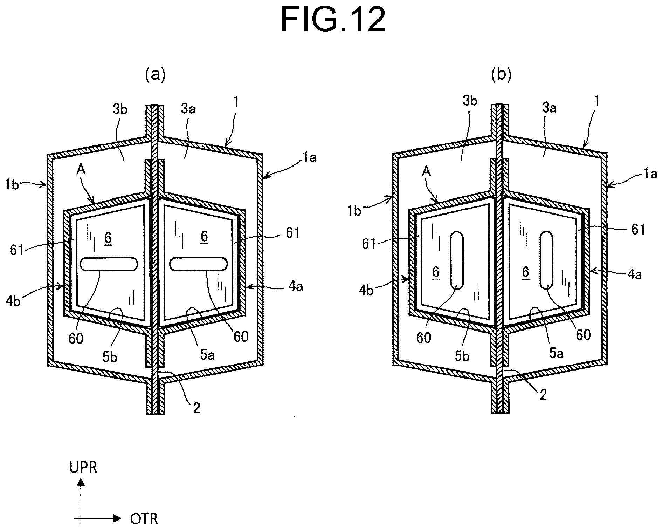

The yield strength of the metal sheet constituting the impact absorbing structure A (sectionally groove-shaped members 4a and 4b and bulkhead 6) is preferably equal to or less than the yield strength of the metal sheet constituting the floor cross member 8. This is because, at the time of side impact, the impact absorbing structure A is reliably deformed prior to the floor cross member 8 to absorb impact energy, and deformation of the floor cross member 8 is suppressed. Therefore, in a case where the yield strength of the metal sheet constituting the impact absorbing structure A is the same as the yield strength of the metal sheet constituting the floor cross member 8, it is preferable that a bead 60 (crash bead) or the like as illustrated in FIG. 12(b) to be described later is applied to the bulkhead 6 constituting the impact absorbing structure A to make the buckling strength (= load at which member itself starts buckling deformation; it similarly applies hereinafter) of the impact absorbing structure A lower than the buckling strength of the floor cross member 8.

In addition, the metal sheet used for the impact absorbing structure A (sectionally groove-shaped members 4a and 4b and bulkhead 6) preferably has a tensile strength of 500 MPa-class or more, more preferably 590 MPa-class or more. As for the crash worthiness of the impact absorbing structure A, as the load (hereinafter, referred to as "impact strength") at the time of turning to plastic deformation through elastic deformation immediately after the start of deformation of the impact absorbing structure A at the time of side impact is higher, deformation at the time of impact is less likely to occur, and the crash worthiness are better. Since the impact strength increases as the tensile strength of the metal sheet used for the impact absorbing structure A increases, it is preferable to use a metal sheet of 500 MPa-class or more (more preferably 590 MPa-class or more) having tensile strength higher than that of common steel. Furthermore, from the viewpoint of weight reduction, in order to apply a metal sheet having a sheet thickness of less than 2 mm to the impact absorbing structure A, it is preferable to use a metal sheet of 1180 MPa-class or more. In addition, when a high-tensile steel sheet is used as a material used for the impact absorbing structure A and the partition member 2, the impact absorbing structure A and the partition member 2 disposed inside the side sill 1 also function as reinforcement of the side sill. Therefore, the metal sheet used for the impact absorbing structure A and the partition member 2 is particularly preferably a high-tensile steel sheet of 1180 MPa-class or more.

### <Function and Effect of Impact Absorbing Structure A>

In the lower structure of automotive body of the present invention, the impact absorbing structure A included in the side sill has a structure in which the sectionally groove-shaped members 4a and 4b joined to each other with the partition member 2 interposed therebetween from both sides and the bulkheads 6 provided in the closed sectional spaces 5a and 5b inside the sectionally groove-shaped members 4a and 4b are integrated together with the partition member 2. In other words, the sectionally groove-shaped members 4a and 4b provided via the partition member 2 enclose the bulkhead 6, and have an integrated structure. With such a structure, the entire impact absorbing structure A has high bending stiffness (bending deformation resistance against side impact load). Therefore, local deformation around the input portion of the side impact load is suppressed, and the impact energy absorption (EA) can be enhanced by deforming the entire impact absorbing structure A at the time of the side impact. In addition, the upper portion of the impact absorbing structure A is positioned on a horizontal extension of the floor cross member 8 (at least a portion of the floor cross member 8 in the height direction) with the side sill inner 1b interposed therebetween in the vehicle width direction (that is, arranged with the floor cross member 8 in the vehicle width direction). Therefore, the side impact load input to the side sill outer 1a is transmitted to the floor cross member 8 via the upper portion of the impact absorbing structure A and the side sill inner 1b. The impact absorbing structure A receives the reaction force from the floor cross member 8, and is crushed and compressed and deformed from the outer side portion of the impact absorbing structure A, thereby efficiently absorbing the impact energy.

At the time of side impact, the vertical surface portion 40 (pressure receiving surface portion) of the outer-side sectionally groove-shaped member 4a receives an impact load via the side sill outer 1a, and the lateral surface portion 41A (energy absorbing surface portion) is bent and collapses first to absorb impact energy. Thereafter, the lateral surface portion 41B (energy absorbing surface portion) of the inner-side sectionally groove-shaped member 4b is bent and collapses to absorb impact energy. At this time, the bulkhead 6 integrated with the sectionally groove-shaped members 4a and 4b suppresses the cross-section collapsing of the sectionally groove-shaped members 4a and 4b in cooperation with the partition member 2, and the bulkhead 6 itself is buckled (axial collapse) to absorb impact energy. Further, the partition member 2 integrated with the sectionally groove-shaped members 4a and 4b is also bent and deformed to absorb impact energy. In addition, in the impact absorbing structure A, since the bulkhead 6 is individually installed with the partition member 2 interposed therebetween (that is, the bulkhead 6 is divided by the partition member 2 in the vehicle width direction), the buckling wavelength of buckling is shortened, and the load resistance of the bulkhead 6 can be improved.

### <Another Embodiment of Impact Absorbing Structure A>

In the side sill of the lower structure of automotive body of the present invention, the sectionally groove-shaped members 4a and 4b (vertical surface portion 40) may have an appropriate interval (space) between the side sill outer 1a and the side sill inner 1b (vertical surface portion 100) as illustrated in FIG. 1. In addition, the sectionally groove-shaped members 4a and 4b may abut on or be joined to the inner side surfaces of the side sill outer 1a and the side sill inner 1b (vertical surface portion 100) mainly to prevent vibration. Therefore, as a specific aspect, the sectionally groove-shaped members 4a and 4b (vertical surface portion 40) and the side sill outer 1a and the side sill inner 1b (vertical surface portion 100) are (i) directly joined or abut on each other, (ii) joined or abut on each other via another member (for example, a vibration damping member that damps vibration), (iii) opposed to each other with a predetermined gap therebetween without being joined or abut on each other, and the like. In addition, since the impact absorption property is improved by transmitting the side impact load to the floor cross member from the initial stage of the impact, structurally, the impact absorption property becomes higher as the width of the impact absorbing structure A (EA member) is closer to the entire width of the side sill. Therefore, from this point of view, the structure of (i) or (ii) described above is preferable.

FIG. 7 schematically illustrates an embodiment in the case of the structures (i) and (ii) described above, and is a longitudinal cross-sectional view of the side sill in the vehicle width direction. FIG. 7(a) illustrates an example (in the drawing, 12 denotes a joint portion) in which the vertical surface portions 40 of the sectionally groove-shaped member 4a and the sectionally groove-shaped member 4b are joined to the inner side surfaces of the vertical surface portions 100 of the side sill outer 1a and the side sill inner 1b by welding (usually spot welding). In addition, FIG. 7(b) illustrates an example in which the vertical surface portions 40 of the sectionally groove-shaped member 4a and the sectionally groove-shaped member 4b are joined to the inner side surfaces of the vertical surface portions 100 of the side sill outer 1a and the side sill inner 1b with an adhesive 13 (adhesive layer). In the case of adhesion with the adhesive 13 as described above, the adhesive may be coated only on a part of the bonding surface. The adhesive 13 (adhesive layer) may function as a vibration damping member that attenuates vibration.

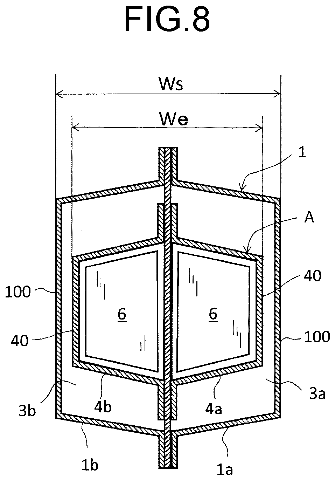

In the case of the structure of (iii) described above, if the interval between the sectionally groove-shaped members 4a and 4b (vertical surface portion 40) and the side sill outer 1a and the side sill inner 1b (vertical surface portion 100) is too narrow, both members come into contact with each other due to vibration during traveling, and noise and further vibration may become a problem. Therefore, it is preferable that both members face each other with a gap therebetween so as not to come into contact with each other due to vibration during traveling. On the other hand, as described above, as the width of the impact absorbing structure A (EA member) is closer to the entire width of the side sill, the impact absorption property is higher. Therefore, the width We (interval between vertical surface portions 40 of both sectionally groove-shaped members 4a and 4b) of the impact absorbing structure A in the vehicle width direction is preferably 60% or more of the width Ws (interval between vertical surface portions 100 of side sill outer 1a and side sill inner 1b) of the side sill 1. FIG. 8 illustrates the width We of the impact absorbing structure A and the width Ws of the side sill 1. In a case where the width We of the impact absorbing structure A or the width Ws of the side sill 1 varies depending on the position in the vehicle height direction, the widths at the height position where the width is the widest are defined as Ws and We. The interval (space) between each of the lateral surface portions 41A and 41B of the sectionally groove-shaped member 4a and the sectionally groove-shaped member 4b and the side sill 1 (the lateral surface portions 101A and 101B of the side sill outer 1a and the side sill inner 1b, respectively) is only required to be adjusted so that the load input to the floor cross member 8 and the battery case 9 is appropriately balanced by adjusting the overlapping margin in the height direction between the vertical surface portion 40 and the floor cross member 8 and the battery case 9.

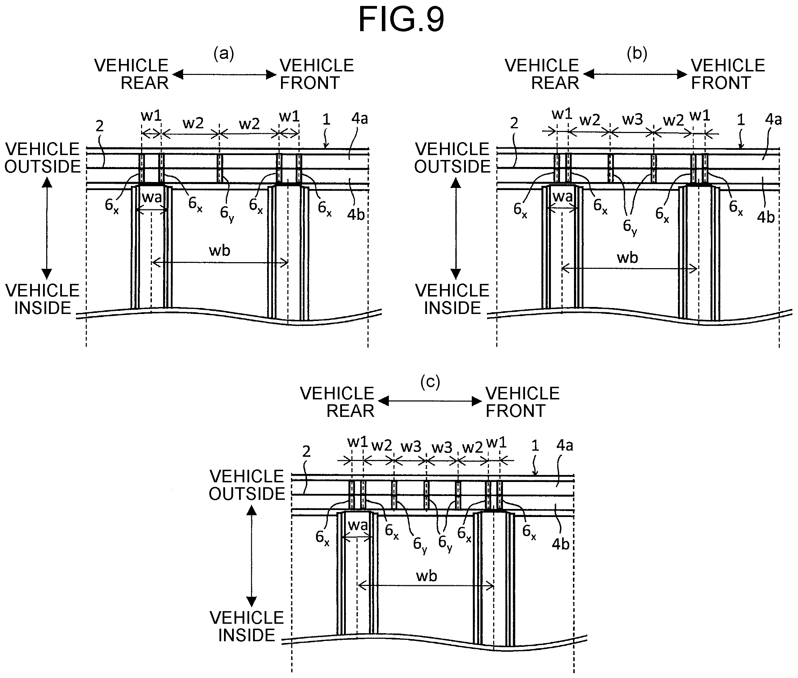

FIG. 9 illustrates another arrangement mode example of the bulkhead 6 in the vehicle front-rear direction in the impact absorbing structure A of the lower structure of automotive body of the present invention, and the bulkhead 6 is provided at different intervals for each region in the vehicle front-rear direction. In these arrangement modes, the bulkheads 6 provided at a plurality of positions spaced apart in the vehicle front-rear direction include a bulkhead 6ₓ provided in a region within the width wa of the floor cross member 8 in the vehicle front-rear direction and a bulkhead 6_{y} provided in the other region (region outside the width of the floor cross member 8). Then, the bulkhead 6ₓ is provided at two or more positions (two positions in the embodiment of FIG. 9) in the region inside the width wa of the floor cross member 8 in the vehicle front-rear direction, and the bulkhead 6_{y} is provided at one or more positions in the region outside the width of the floor cross member 8. Furthermore, in a case where the interval between two adjacent bulkheads 6ₓ is represented by w1, and the interval between the bulkhead 6ₓ and the bulkhead 6_{y} adjacent thereto is represented by w2, w1 < w2 is satisfied. The arrangement mode of the bulkheads 6 as described above is configured such that the bulkheads 6ₓ are provided at two or more positions in the region within the width wa of the floor cross member 8 to reduce the interval between the bulkheads 6ₓ to improve the crash worthiness, and the interval between the bulkheads 6_{y} and the bulkheads 6ₓ in the other region is increased to suppress the number of bulkheads 6 to reduce the weight. In a case where the bulkheads 6_{y} are provided at two or more positions in the region outside the width of the floor cross member 8, the interval w3 between two adjacent bulkheads 6_{y} is preferably set to satisfy w1 < w3.

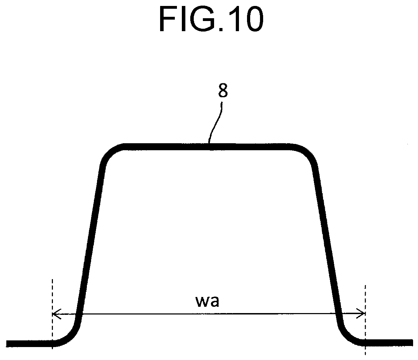

The width wa of the floor cross member 8 is only required to be a width of a portion between both side walls in the width direction of the floor cross member. FIG. 10 schematically illustrates a cross section of a general floor cross member 8 in the width direction. In the case of the floor cross member 8 having flange portions at both edge portions as illustrated in FIG. 10, the width wa of the floor cross member 8 is only required to be a width of a portion excluding the flange portions at both edge portions in the width direction of the floor cross member (a width of a main portion functioning as a frame member), that is, a width between portions (the boundary between a curve and a straight line) where R of the flange portion starts. In a case where the bulkheads 6ₓ are disposed at a plurality of positions within the width wa of the floor cross member 8, if the interval w1 between two adjacent bulkheads 6ₓ is excessively small, the effect of enhancing the crash worthiness within the width wa of the floor cross member 8 is reduced, or the number of bulkheads 6ₓ is unnecessarily increased, which is not preferable. Therefore, the bulkhead 6ₓ is preferably disposed such that the ratio w1/wa of the interval w1 to the width wa of the floor cross member 4 is 0.4 or more and 1.0 or less.

On the other hand, the interval w2 between the adjacent bulkheads 6ₓ and 6_{y} and the interval w3 between the adjacent bulkheads 6_{y} are preferably as wide as possible from the viewpoint of weight reduction of the impact absorbing structure A, but are preferably 254 mm or less in order to secure bending stiffness of the impact absorbing structure A at the time of side impact. This 254 mm is the diameter of the impact object (pole) used in the side impact test (side pole test defined in Euro NCAP). By setting the intervals w2 and w3 to be equal to or less than the diameter of the impact object (pole) in this test, it is possible to more appropriately secure the bending stiffness of the impact absorbing structure A at the time of side impact. In addition, from a similar viewpoint, the interval w2 between the bulkheads 6ₓ and 6_{y} adjacent to each other and the interval w3 between the bulkheads 6_{y} are preferably about 1/4 to 1/2 of the installation interval of the floor cross member 8 (the interval wb between the floor cross members 8 adjacent to each other). For example, in a case where the installation interval wb of the floor cross member 8 is 260 mm, the interval w2 and the interval w3 are preferably about 65 mm to 130 mm. In addition, from the viewpoint of weight reduction of the impact absorbing structure A, the interval w2 and the interval w3 are preferably 50 mm or more. The arrangement mode of FIG. 9(a) is an example in which the bulkhead 6_{y} is provided at one position in a region outside the width of the floor cross member 8 between the adjacent floor cross members 8, and the bulkheads 6ₓ and 6_{y} are provided under the condition that w1 < w2 is satisfied. In addition, the arrangement mode of FIGS. 9(b) and 9(c) is an example in which the bulkheads 6_{y} are provided at two to three positions in the region outside the width of the floor cross member 8 between the adjacent floor cross members 8, and the bulkheads 6ₓ and 6_{y} are provided under the condition that w1 < w2 and w1 < w3 are satisfied.

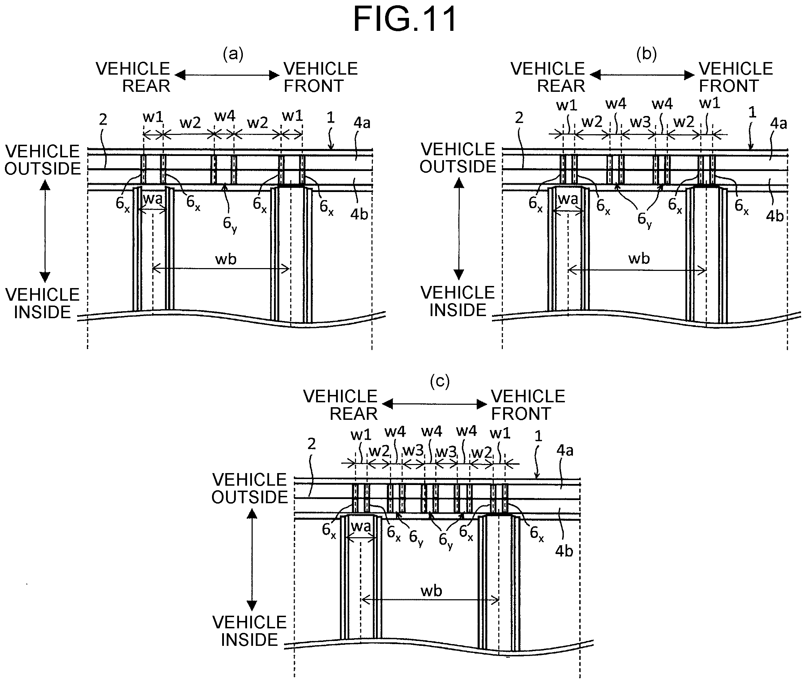

FIG. 11 illustrates another arrangement mode example of the bulkhead 6 in the vehicle front-rear direction. In the embodiment of FIG. 11, similarly to the embodiment of FIG. 9, the bulkhead 6 is provided at different intervals for each region in the vehicle front-rear direction. In the present embodiment, in order to further increase the bending stiffness of the impact absorbing structure A between the floor cross members 8, the bulkhead 6_{y} provided in a region outside the width of the floor cross member 8 is configured by a bulkhead set including two or more bulkheads (two bulkheads in the embodiment of FIG. 11) provided adjacent to each other. Therefore, each bulkhead 6_{y} of the embodiment of FIG. 11 is constituted by a bulkhead set including two bulkheads as one set. Although the size of the interval w4 between the bulkheads constituting the bulkhead set is arbitrary, the interval w4 is basically determined from substantially a similar viewpoint to the interval w1, and thus, the condition is only required be the same as the above-described interval w1. The configuration of the bulkhead 6_{y} including the bulkhead set including two or more bulkheads in this manner may target all of the bulkheads 6_{y} or may target only some of the bulkheads 6_{y}.

The arrangement mode of FIG. 11(a) is an example in which the bulkhead 6_{y} (a bulkhead set including two bulkheads as one set) is provided at one position in a region outside the width of the floor cross member 8 between the adjacent floor cross members 8, and the bulkheads 6ₓ and 6_{y} are provided under the condition that w1 < w2 is satisfied. In addition, the arrangement mode of FIGS. 11(b) and 11(c) is an example in which the bulkheads 6_{y} (a bulkhead set including two bulkheads as one set) are provided at two to three positions in a region between the floor cross members 8 adjacent to each other and outside the width of the floor cross member 8, and the bulkheads 6ₓ and 6_{y} are provided under the condition that w1 < w2 and w1 < w3 are satisfied.

In addition, a bead 60 may be provided on a main body (bulkhead portion) of the bulkhead 6 in order to increase buckling strength (stiffness) thereof or to decrease buckling strength (stiffness) thereof. FIG. 12 schematically illustrates an embodiment in that case, and is a longitudinal cross-sectional view of the side sill in the vehicle width direction. In FIG. 12(a), a bead 60 along the vehicle width direction is provided in the main body portion (bulkhead portion) of the bulkhead 6 in order to increase buckling strength. On the other hand, in FIG. 12(b), a bead 60 (crash bead) along the vertical direction is provided in the main body portion (bulkhead portion) of the bulkhead 6 in order to lower the buckling strength force. The reason for providing the bead 60 as illustrated in FIG. 12(b) is as described above.

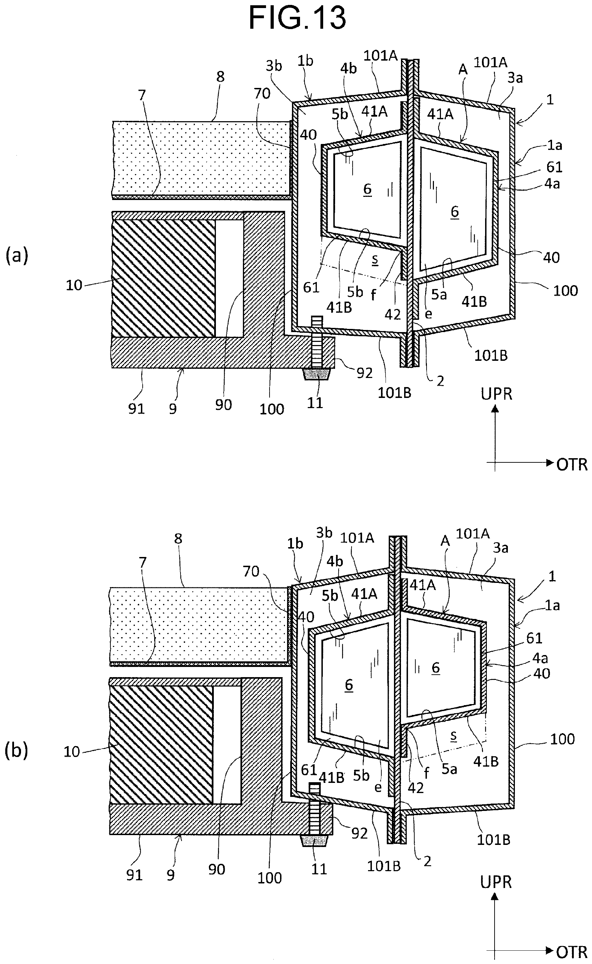

In the embodiment such as FIG. 1 described above, the outer side portion (sectionally groove-shaped member 4a) and the inner side portion (sectionally groove-shaped member 4b) of the impact absorbing structure A have substantially the same height (thickness) in the vehicle height direction, and are opposed to each other with the partition member 2 interposed therebetween. In particular, in these embodiments, the inner side portion and the outer side portion of the impact absorbing structure A have substantially symmetrical shapes with the partition member 2 interposed therebetween in the vehicle width direction. On the other hand, the lower portion of the impact absorbing structure A can have a structure in which one of the inner side portion and the outer side portion extends downward (that is, a structure formed longer in the downward direction) than the other. In this case, in the lower portion of the impact absorbing structure A, at least a portion e extending in the downward direction is positioned on a horizontal extension of the battery case 9 (at least a portion of the battery case 9 in the height direction) in the vehicle width direction. That is, at least a portion e of the lower portion of the impact absorbing structure A is aligned in the vehicle width direction with the battery case 9 (at least a portion of the battery case 9 in the height direction) via the side sill 1. Then, a hollow space s not occupied by the impact absorbing structure A is formed in a portion facing the portion e with the partition member 2 interposed therebetween. FIG. 13 schematically illustrates an embodiment of the lower structure of automotive body of the present invention having such a structure, and is a longitudinal cross-sectional view in the vehicle width direction of the lower structure of automotive body (one structural portion of the structural portions on both sides of the automotive body lower portion) including the side sill.

In the embodiment of FIG. 13(a), the lower portion of the impact absorbing structure A has a structure in which the outer side portion extends downward from the inner side portion (that is, a structure formed longer in the downward direction). In the upper portion of the impact absorbing structure A, the outer side portion and the inner side portion face each other with the partition member 2 interposed therebetween, and are positioned on a horizontal extension of the floor cross member 8 (at least a portion of the floor cross member 8 in the thickness (height) direction) in the vehicle width direction. That is, the upper portion of the impact absorbing structure A is aligned with the floor cross member 8 in the vehicle width direction via the side sill 1 (side sill inner 1b). On the other hand, in the lower portion of the impact absorbing structure A, the outer side portion extends downward from the inner side portion, and the portion e extending in the downward direction is positioned on the horizontal extension of the battery case 9 (at least a portion in the height direction of the battery case 9) in the vehicle width direction. That is, the portion e extending downward is aligned with the battery case 9 in the vehicle width direction via the side sill 1 (side sill inner 1b). Then, a hollow space s (a hollow space in the closed sectional space 3b) not occupied by the impact absorbing structure A is formed in an inner side portion facing the portion e with the partition member 2 interposed therebetween.

In the embodiment of FIG. 13(b), the lower portion of the impact absorbing structure A has a structure in which the inner side portion extends downward from the outer side portion (that is, a structure formed to be long in the downward direction). Similarly to the embodiment of FIG. 13(a), in the upper portion of the impact absorbing structure A, the outer side portion and the inner side portion face each other with the partition member 2 interposed therebetween, and are positioned on a horizontal extension of the floor cross member 8 (at least a part of the floor cross member 8 in the thickness (height) direction) in the vehicle width direction. That is, the upper portion of the impact absorbing structure A is aligned with the floor cross member 8 in the vehicle width direction via the side sill 1 (side sill inner 1b). On the other hand, in the lower portion of the impact absorbing structure A, the inner side portion extends downward from the outer side portion, and the portion e extending in the downward direction is positioned on the horizontal extension of the battery case 9 (at least a portion in the height direction of the battery case 9) in the vehicle width direction. That is, the portion e extending downward is aligned with the battery case 9 in the vehicle width direction via the side sill 1 (side sill inner 1b). Then, a hollow space s (a hollow space in the closed sectional space 3a) not occupied by the impact absorbing structure A is formed in an outer side portion facing the portion e with the partition member 2 interposed therebetween.

In the structure of the impact absorbing structure A as illustrated in FIG. 13, the buckling induction effect by the structure around the hollow space s ensures the impact energy absorption property. Therefore, it is possible to reduce the weight of the impact absorbing structure A (inner side portion or outer side portion) by the hollow space s without deteriorating the impact energy absorption property of the impact absorbing structure A as compared with the structure of FIG. 1. More specifically, for example, in the case of FIG. 13(a), the "corner R portion f formed by the lateral surface portion 41B of the sectionally groove-shaped member 4b and the flange portion 42" and the "corner portion of the bulkhead 6 in contact with the corner R portion f" in the inner side portion of the impact absorbing structure A abut on the bulkhead 6 of the outer side portion via the partition member 2. For this reason, at the time of side impact, buckling is induced also from the periphery of the abutting portion of the bulkhead 6 on the outer side portion (buckling induction effect), and thus even the impact absorbing structure A having the structure as illustrated in FIG. 13(a) does not have a lower impact energy absorption property than the structure of FIG. 1. On the other hand, the weight of the impact absorbing structure A (inner side portion) can be reduced by the hollow space s. In addition, it similarly applies to the case of FIG. 13(b), and the "corner R portion f formed by the lateral surface portion 41B of the sectionally groove-shaped member 4a and the flange portion 42" and the "corner portion of the bulkhead 6 in contact with the corner R portion f" in the outer side portion of the impact absorbing structure A abut on the bulkhead 6 in the inner side portion via the partition member 2. For this reason, at the time of side impact, buckling is induced also from the periphery of the abutting portion of the bulkhead 6 in the inner side portion, and thus, even in the impact absorbing structure A having the structure as illustrated in FIG. 13(b), the impact energy absorption property is not deteriorated as compared with the structure of FIG. 1. On the other hand, the weight of the impact absorbing structure A (outer side portion) can be reduced by the hollow space s.

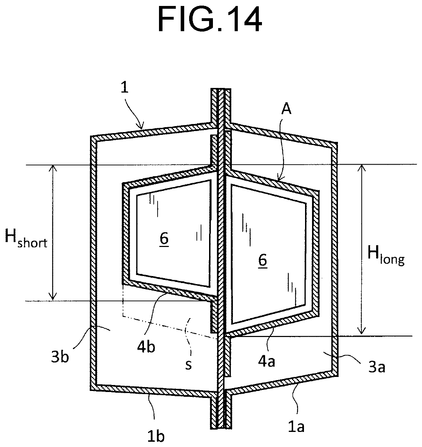

In the structure of the impact absorbing structure A as illustrated in FIG. 13, if the height of the smaller one of the outer side portion (sectionally groove-shaped member 4a) and the inner side portion (sectionally groove-shaped member 4b), for example, the inner side portion in FIG. 13(a), is too small, the plane stiffness of the bulkhead 6 in the closed sectional space 5b is reduced at the time of side impact, and the function of maintaining the cross-sectional shape of the inner side portion of the impact absorbing structure A is deteriorated, so that the impact energy absorption property is deteriorated. Therefore, the height Hₛₕₒᵣₜ of the "portion having a smaller height" illustrated in FIG. 14 is preferably not excessively small with respect to the height H_{long} of the "portion having a larger height" having the portion e extending downward. Specifically, Hₛₕₒᵣₜ is preferably about 40% or more, desirably about 50% or more of H_{long}. On the other hand, when the difference in height (difference between Hₛₕₒᵣₜ and H_{long}) between the outer side portion (sectionally groove-shaped member 4a) and the inner side portion (sectionally groove-shaped member 4b) is too small, the above-described buckling induction effect of the bulkhead 6 relatively decreases. That is, the buckling induction effect and the weight reduction effect due to the structure of the impact absorbing structure A as illustrated in FIG. 13 are relatively reduced. Therefore, in order to sufficiently enjoy the effect, it is better not to excessively reduce the difference between the height Hₛₕₒᵣₜ of the "portion having the smaller height" and the height H_{long} of the "portion having the larger height" illustrated in FIG. 14. Specifically, Hₛₕₒᵣₜ is preferably about 80% or less, desirably about 65% or less of H_{long}. As illustrated in FIG. 14, in a case where the height of the outer side portion (sectionally groove-shaped member 4a) or the inner side portion (sectionally groove-shaped member 4b) of the impact absorbing structure A varies depending on the position in the vehicle width direction, the height at the highest position is set as the height Hₛₕₒᵣₜ of the "portion having the smaller height" and the height H_{long} of the "portion having the larger height".

In the embodiment such as FIG. 1 described above, the outer side portion (sectionally groove-shaped member 4a) and the inner side portion (sectionally groove-shaped member 4b) of the impact absorbing structure A have a quadrangular (trapezoidal) cross-sectional shape in the vehicle width direction, and are opposed to each other with the partition member 2 interposed therebetween. In particular, in these embodiments, the inner side portion and the outer side portion of the impact absorbing structure A have substantially symmetrical shapes with the partition member 2 interposed therebetween in the vehicle width direction. On the other hand, the recessed portion c facing the inner surface of the side sill 1 (the side sill inner 1b or the side sill outer 1a) can be formed in any one of the inner side portion and the outer side portion sandwiching the partition member 2 in the lower region or the region including the lower portion in the height direction of the impact absorbing structure A. In this case, a space (a space formed by the recessed portion c) is secured in the vehicle width direction between the lower portion of the impact absorbing structure A and the side sill 1, and the lower portion of the impact absorbing structure A where the recessed portion c exists is positioned on a horizontal extension of the battery case 9 (at least a portion of the battery case 9 in the height direction) in the vehicle width direction. That is, the lower portion of the impact absorbing structure A where the recessed portion c exists is aligned with the battery case 9 (at least a portion of the battery case 9 in the height direction) in the vehicle width direction. The recessed portion c can be formed so as to include not only a lower region in the height direction of the impact absorbing structure A but also a region above the lower region (that is, formed in a region including a lower portion in the height direction of the impact absorbing structure A).

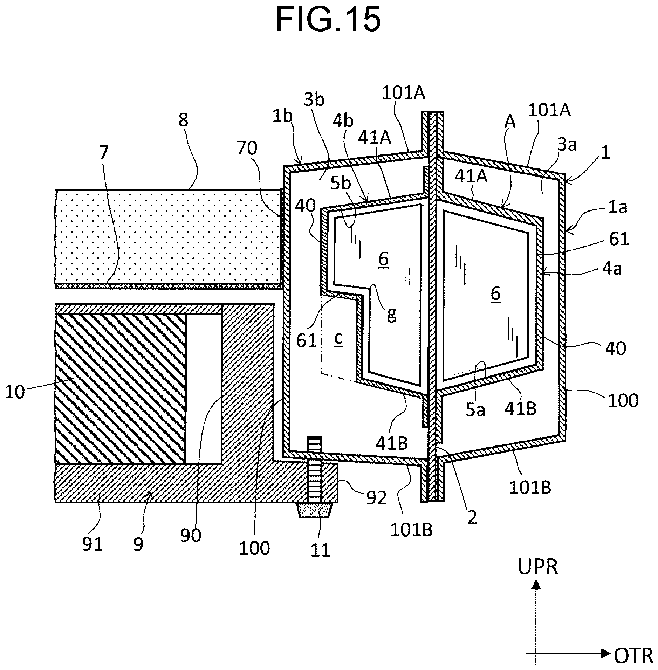

FIG. 15 schematically illustrates an embodiment of the lower structure of automotive body of the present invention having such a structure, and is a longitudinal cross-sectional view in the vehicle width direction of the lower structure of automotive body (one structural portion of the structural portions on both sides of the automotive body lower portion) including the side sill. In the embodiment of FIG. 15, a recessed portion c is formed in the lower region of the inner side portion of the impact absorbing structure A so as to face the inner surface of the side sill 1 (side sill inner 1b). The recessed portion c is formed by recessing a lower region of an inner side portion (sectionally groove-shaped member 4b) of the impact absorbing structure A facing the side sill inner 1b (the vertical surface portion 100 and the lateral surface portion 101B) stepwise so that a space (a space formed by the recessed portion c) is secured in the vehicle width direction between the impact absorbing structure A and the side sill 1 (the side sill inner 1b) in the closed sectional space 3b. That is, the recessed portion c is formed to face the vertical surface portion 100 and the lateral surface portion 101B of the side sill inner 1b in the lower region of the inner side portion of the impact absorbing structure A. A lower region of the impact absorbing structure A including the recessed portion c is positioned on a horizontal extension of the battery case 9 (at least a part of the battery case 9 in the height direction) in the vehicle width direction. That is, the lower region of the impact absorbing structure A including the recessed portion c is aligned with the battery case 9 (at least a portion of the battery case 9 in the height direction) in the vehicle width direction. Similarly to the embodiment of FIG. 13, in the upper portion of the impact absorbing structure A, the outer side portion and the inner side portion face each other with the partition member 2 interposed therebetween, and are positioned on the horizontal extension of the floor cross member 8 (at least a part of the floor cross member 8 in the thickness direction) in the vehicle width direction. That is, the upper portion of the impact absorbing structure A is aligned with the floor cross member 8 in the vehicle width direction via the side sill 1 (side sill inner 1b). The bulkhead 6 of the inner side portion is configured to have a shape corresponding to the cross-sectional shape of the inner side portion (sectionally groove-shaped member 4b) in which the recessed portion c is formed.

The recessed portion c may be formed in a lower region or a region including a lower portion in the height direction of the outer side portion of the impact absorbing structure A so as to face the inner surface of the side sill 1 (side sill outer 1a). For example, in a case where the recessed portion c in the mode according to FIG. 15 is formed in the lower region of the outer side portion of the impact absorbing structure A, the recessed portion c is formed by recessing the lower region of the outer side portion (sectionally groove-shaped member 4a) of the impact absorbing structure A facing the side sill outer 1a (the vertical surface portion 100 and the lateral surface portion 101B) stepwise so that a space (space formed by the recessed portion c) is secured in the vehicle width direction between the impact absorbing structure A and the side sill 1 (the side sill outer 1a) in the closed sectional space 3a. That is, the recessed portion c is formed to face the vertical surface portion 100 and the lateral surface portion 101B of the side sill outer 1a in the lower region of the outer side portion of the impact absorbing structure A. The lower region of the impact absorbing structure A including the recessed portion c is positioned on a horizontal extension of the battery case 9 (at least a part of the battery case 9 in the height direction) in the vehicle width direction. That is, the lower region of the impact absorbing structure A including the recessed portion c is aligned with the battery case 9 (at least a portion of the battery case 9 in the height direction) in the vehicle width direction.

In the structure of the impact absorbing structure A as illustrated in FIG. 15, the impact energy absorption property is secured by the buckling induction effect in which the structure around the recessed portion c is buckled. Therefore, it is possible to reduce the weight of the impact absorbing structure A (inner side portion or outer side portion) by the recessed portion c without deteriorating the impact energy absorption property of the impact absorbing structure A as compared with the structure of FIG. 1. This will be described more specifically by taking the case of FIG. 15 in which the recessed portion c is formed in the inner side portion of the impact absorbing structure A as an example. Due to the formation of the recessed portion c, a notch along the recessed shape of the recessed portion c is also formed in the bulkhead 6 in the closed sectional space 5b. For this reason, the corner R portion g of the notch of the bulkhead 6 is buckled and bent at the time of side impact, and buckling is also induced in the peripheral portion of the corner R portion g of the notch to absorb the impact load (buckling induction effect). Therefore, even the impact absorbing structure A having a structure as illustrated in FIG. 15 does not have a lower impact energy absorption property than the structure of FIG. 1, and on the other hand, the impact absorbing structure A (inner side portion) can be reduced in weight by the recessed portion c. In addition, it similarly applies to a case where the recessed portion c is formed in the outer side portion of the impact absorbing structure A. Due to the formation of the recessed portion c, a notch along the recessed shape of the recessed portion c is also formed in the bulkhead 6 in the closed sectional space 5a, and buckling is also induced from the corner R portion g of the notch of the bulkhead 6 at the time of side impact. Therefore, even in the impact absorbing structure A in which the recessed portion c is formed, the impact energy absorption property is not deteriorated as compared with the structure of FIG. 1, and on the other hand, the impact absorbing structure A (outer side portion) can be reduced in weight by the recessed portion c.

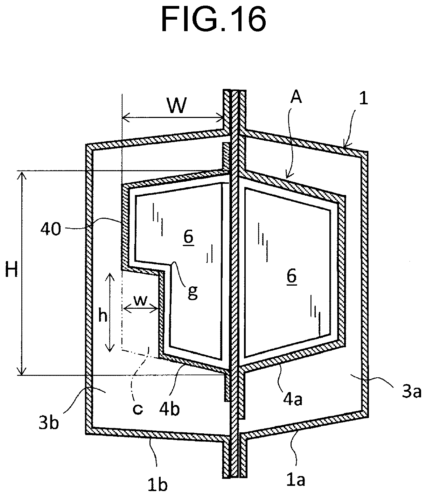

In the structure of the impact absorbing structure A as illustrated in FIG. 15, if the height (width) of the recessed portion c in the vehicle height direction (the height direction of the impact absorbing structure A) is too large, the pressure receiving surface portion (the vertical surface portion 40 of the sectionally groove-shaped member 4b) of the inner side portion facing the floor cross member 8 becomes narrow, and the crash worthiness in the upper portion of the impact absorbing structure A deteriorate. Therefore, the height h in the vehicle height direction of the recessed portion c illustrated in FIG. 16 is preferably not excessively larger than the height (thickness) H in the vehicle height direction of the inner side portion (or the outer side portion) of the impact absorbing structure A. Specifically, the height h is preferably about 90% or less, desirably about 75% or less of the height (thickness) H in the vehicle height direction of the inner side portion (or the outer side portion) of the impact absorbing structure A. On the other hand, if the height (width) of the recessed portion c in the vehicle height direction is too small, the pressure receiving surface portion (the vertical surface portion 40 of the sectionally groove-shaped member 4b) of the inner side portion facing the floor cross member 8 becomes wide, and the impact load is dispersed. This makes buckling less likely to occur at the corner R portion g of the notch of the bulkhead 6 corresponding to the recessed portion c, so that the effect of improving the impact energy absorption property by providing the recessed portion c is less likely to be obtained. That is, the buckling induction effect and the weight reduction effect due to the structure of the impact absorbing structure A as illustrated in FIG. 15 are relatively reduced. Therefore, in order to sufficiently enjoy the effect, the height h in the vehicle height direction of the recessed portion c illustrated in FIG. 16 is preferably not excessively reduced with respect to the height (thickness) H in the vehicle height direction of the inner side portion (or the outer side portion) of the impact absorbing structure A. Specifically, the height h is preferably about 20% or more, desirably about 50% or more of the height (thickness) H in the vehicle height direction of the inner side portion (or the outer side portion) of the impact absorbing structure A.

In addition, in the structure of the impact absorbing structure A as illustrated in FIG. 15, if the width (depth) of the recessed portion c in the vehicle width direction is too large, the corner R portion g of the notch of the bulkhead 6 corresponding to the recessed portion c comes close to the partition member 2, and buckling of the peripheral portion of the corner R portion g hardly occurs, so that the impact energy absorption property is deteriorated. Therefore, it is preferable that the width w in the vehicle width direction of the recessed portion c illustrated in FIG. 16 is not excessively large with respect to the width W in the vehicle width direction of the inner side portion (or the outer side portion) of the impact absorbing structure A. Specifically, the width w is preferably about 90% or less of the width W in the vehicle width direction of the inner side portion (or the outer side portion) of the impact absorbing structure A. On the other hand, if the width (depth) of the recessed portion c in the vehicle width direction is too small, the recessed portion c is buckled and bent, and the space between the impact absorbing structure A and the side sill 1 is blocked and abuts on the side sill 1, so that the contact reaction force generated in the battery case side member 90 cannot be suppressed to a low level. Therefore, the width w of the recessed portion c in the vehicle width direction should not be excessively smaller than the width W of the inner side portion (or the outer side portion) of the impact absorbing structure A in the vehicle width direction. Specifically, the width w is preferably about 20% or more of the width W of the inner side portion (or the outer side portion) of the impact absorbing structure A in the vehicle width direction. As illustrated in FIG. 16, in a case where the height of the outer side portion (sectionally groove-shaped member 4a) or the inner side portion (sectionally groove-shaped member 4b) of the impact absorbing structure A varies depending on the position in the vehicle width direction, the height at the position having the largest height is defined as the height H. In addition, in a case where the width of the outer side portion (sectionally groove-shaped member 4a) or the inner side portion (sectionally groove-shaped member 4b) varies depending on the position in the vehicle height direction, the width at the position where the width is the largest is defined as the width W. In addition, in a case where the height of the recessed portion c varies depending on the position in the vehicle width direction, the height at the position having the largest height is set as the height h of the recessed portion c. In addition, in a case where the width of the recessed portion c varies depending on the position in the vehicle height direction, the width at the position having the largest width is defined as the width w of the recessed portion c.

### <Impact Deformation Mode at Time of Side Impact of Side Sill>

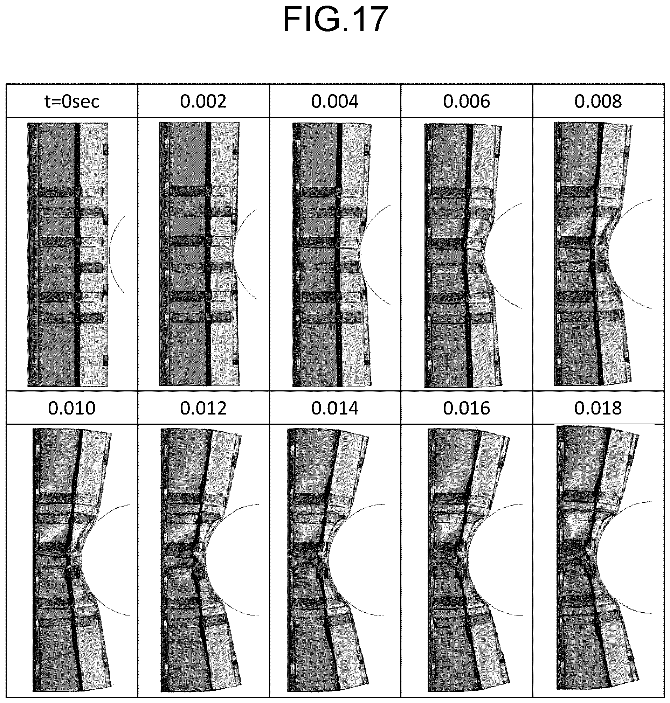

An impact deformation mode of the side sill in the lower structure of automotive body of the present invention at the time of side impact will be described with reference to FIG. 17. FIG. 17 illustrates a state of deformation at the time of a side pole impact in stages in a horizontal cross section of the side sill (the structure of FIG. 1) in the lower structure of automotive body of the present invention, and t illustrates a time (seconds) from the start of the impact. First, the mode of the cross-sectional deformation of the side sill 1 itself will be described. First, the upper and lower lateral surface portions 101A and 101B (energy absorbing portions) of the side sill outer 1a are bent and collapse so as to spread outward to absorb impact energy (0.002 sec to more). In the process of crushing the side sill outer 1a, the cross section of the side sill 1 is prevented from opening up and down by the partition member 2 and collapsing (cross-section collapsing). As a result, the lateral surface portions 101A and 101B (energy absorbing portions) of the side sill outer 1a continue bending deformation and continue to absorb the impact energy until the side sill outer 1a is completely crushed until 0.006 to 0.014 sec.

As the side sill outer 1a is crushed and deformed as described above, an impact load is transmitted to the side sill inner 1b via the flange portion 102 of the side sill 1. As a result, the cross section is not opened and collapsed in the vertical direction by the partition member 2, and the flange portion side of the lateral surface portions 101A and 101B (energy absorbing portions) of the side sill inner 1b is bent and collapses into a convex shape toward the inside of the closed cross section of the side sill 1 after 0.004 sec. With such cross-sectional deformation of the side sill 1 itself, the impact absorbing structure A is deformed in cross section as follows. The crushed side sill outer 1a and the vertical surface portion 40 of the sectionally groove-shaped member 4a come into contact with each other, an impact load is transmitted to the impact absorbing structure A, and crushing (axial collapse) in which the outer side portion (the sectionally groove-shaped member 4a and the bulkhead 6) is deformed into a bellows shape is started (0.002 sec to more). Along with the crushing of the outer side portion (the sectionally groove-shaped member 4a and the bulkhead 6) of the impact absorbing structure A, the inner side portion (the sectionally groove-shaped member 4b and the bulkhead 6) of the impact absorbing structure A continuous via the partition member 2 is pressed toward the battery case 9 via the side sill inner 1b (0.004 to 0.006 sec), and the inner side portion (the sectionally groove-shaped member 4b and the bulkhead 6) of the impact absorbing structure A also starts crushing (0.008 to 0.018 sec).

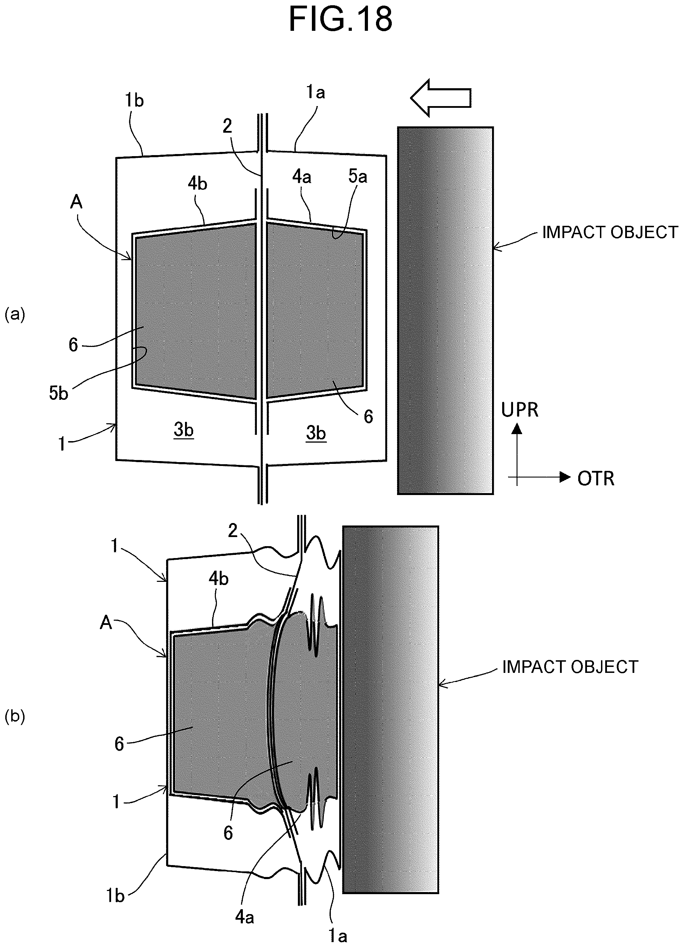

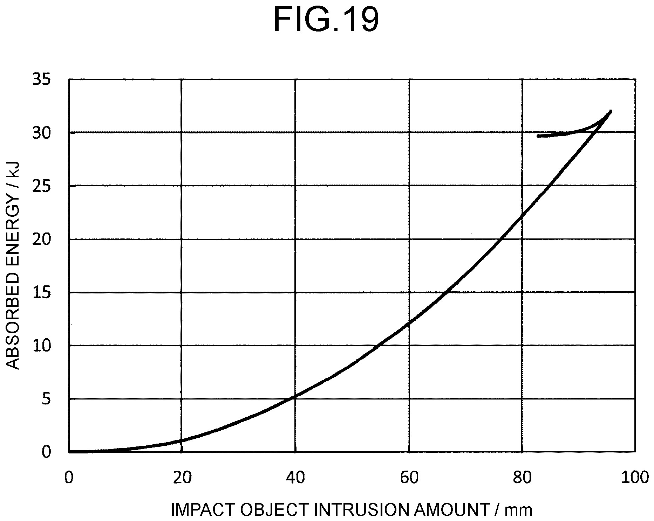

FIGS. 18 schematically illustrate a state of deformation in the longitudinal cross section in the vehicle width direction at the time of side pole impact when the side sill (the structure of FIG. 1) in the lower structure of automotive body of the present invention is subjected to the side pole test under the following conditions. FIG. 19 illustrates a relationship between the impact object intrusion amount and the absorbed energy at the time of deformation at the time of the side pole impact. As the test body, the bulkhead 6 was arranged as illustrated in FIG. 9(a). This test illustrates that impact energy of 32 kJ can be absorbed within an impact object intrusion amount of 100 mm by mainly deforming the outer side portion (the sectionally groove-shaped member 4a and the bulkhead 6) of the impact absorbing structure A.
Impact object: a rigid pole with R 127 mm (corresponding to a diameter of 254 mm)
Impact speed: 30.9 km/h
Impact energy: 32 kJ

In the cross-sectional deformation of the side sill structure at the time of side impact as described above, the impact absorbing structure A installed in the side sill 1 via the partition member 2 and having a structure in which the sectionally groove-shaped members 4a and 4b and the bulkhead 6 are integrated together with the partition member 2 has high deformation resistance. Therefore, since the side sill 1 is integrally deformed as a whole without being locally deformed (for example, the impact portion is deformed so as to be bent) with respect to the input load, the impact energy is effectively and appropriately absorbed. Therefore, in the side sill in the lower structure of automotive body of the present invention, as illustrated in FIG. 1, in an automobile (particularly, a battery powered vehicle) including a battery module below the floor panel 7 between the side sills 1, the impact absorbing structure A is crushed by a load input from the vehicle width direction at the time of side impact to absorb energy, and the load is transmitted to the floor cross member 8 and the battery case 9, so that the load is prevented from being transmitted to the battery pack 10, and the battery pack 10 can be protected from impact of impact.

### <Function and Effect of Impact Absorbing Structure A in Side Sill of FIG. 13>

Of the side sills of the lower structure of automotive body of the present invention, the embodiment having the basic structure as illustrated in FIG. 1 is referred to as "the first embodiment", the embodiment having the structure illustrated in FIG. 13(a) is referred to as "the second embodiment", and the results of comparing and examining the function and effect of "the second embodiment" with "the first embodiment" are illustrated below. In each of the test bodies, the bulkhead 6 was arranged as illustrated in FIG. 9(a). Note that the results illustrated below are similar in a case where the embodiment having the structure illustrated in FIG. 13(b) is referred to as "the second embodiment", and "inner side" and "outer side" in the description are only required to be understood in reverse.

### · Absorbed Energy

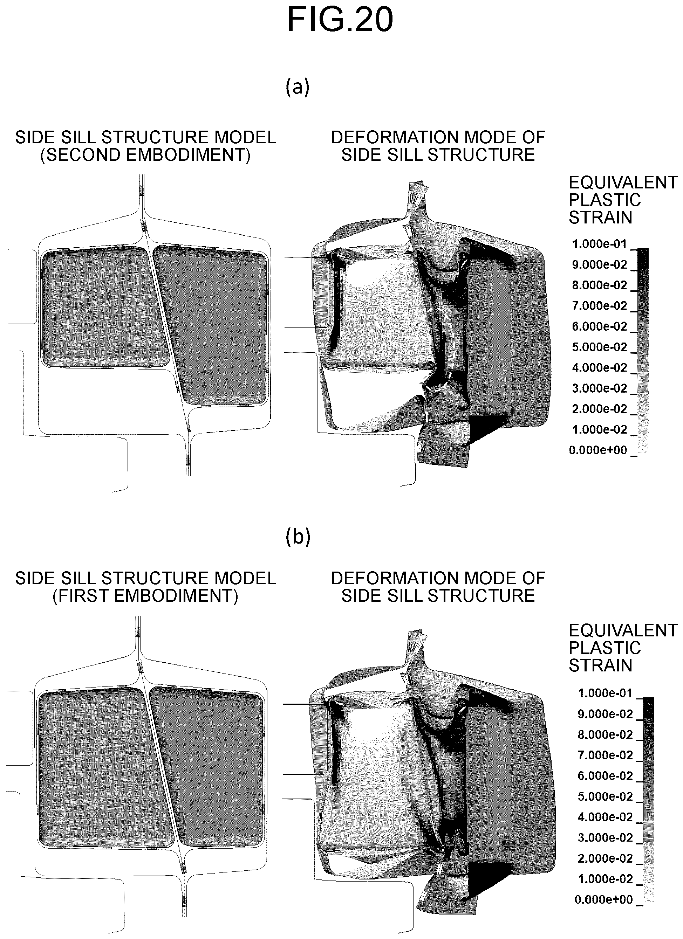

FIG. 20 illustrates the side sill according to the second embodiment and the side sill according to the first embodiment by comparing the deformation mode and the strain distribution at the time of side impact, and FIG. 20(a) illustrates the second embodiment, and FIG. 20(b) illustrates the first embodiment. Comparing the second embodiment of FIG. 20(a) with the first embodiment of FIG. 20(b), the areas of the region where buckling of the bulkhead 6 occurs and the region where the strain is 0.09 or more (dark color region) are at an equivalent level.

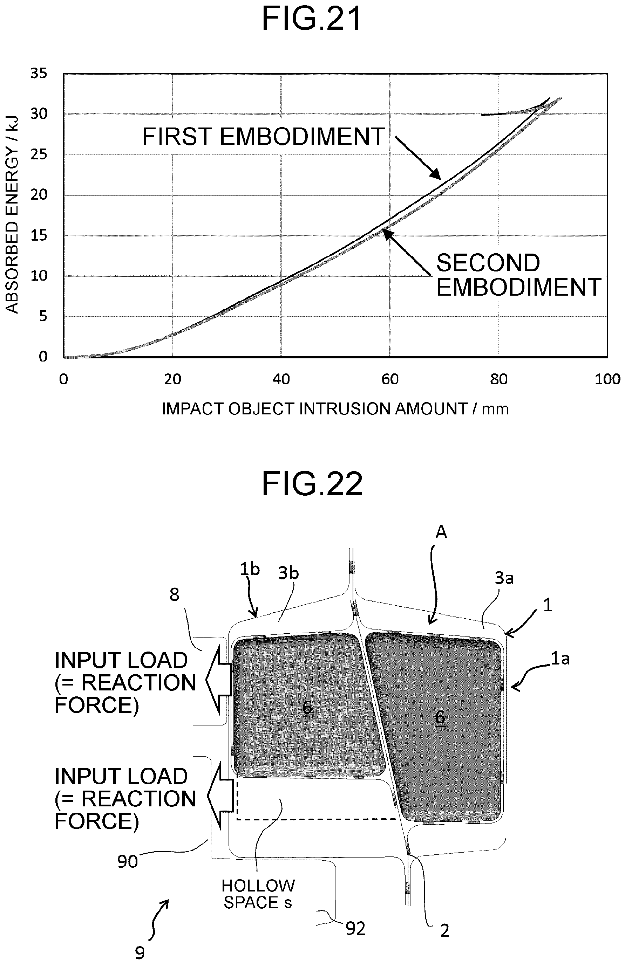

FIG. 21 illustrates a comparison of the relationship between the impact object (pole) intrusion amount and the absorbed energy when the side pole test is performed on the side sill of the second embodiment and the side sill of the first embodiment under the condition of FIGS. 18 and the side pole test is deformed at the time of the side pole impact. According to this, the absorbed energy of any embodiment is 32.0 kJ, and the impact object intrusion amount is almost equivalent (91 mm in the second embodiment, 89 mm in the first embodiment), and it is illustrated that the second embodiment has crash worthiness at an equivalent level to the first embodiment. The reason for this is that, in the second embodiment, although the size of the inner side portion of the impact absorbing structure A is smaller than that in the first embodiment, the buckling induction effect of the bulkhead by the specific structure (the hollow space s in FIG. 13(a)) as described above can be obtained. This is because the impact energy absorption property is maintained at a high level without being deteriorated as compared with the first embodiment (the structure of FIG. 1).

### · Effect of Reducing Input Load to Battery Case

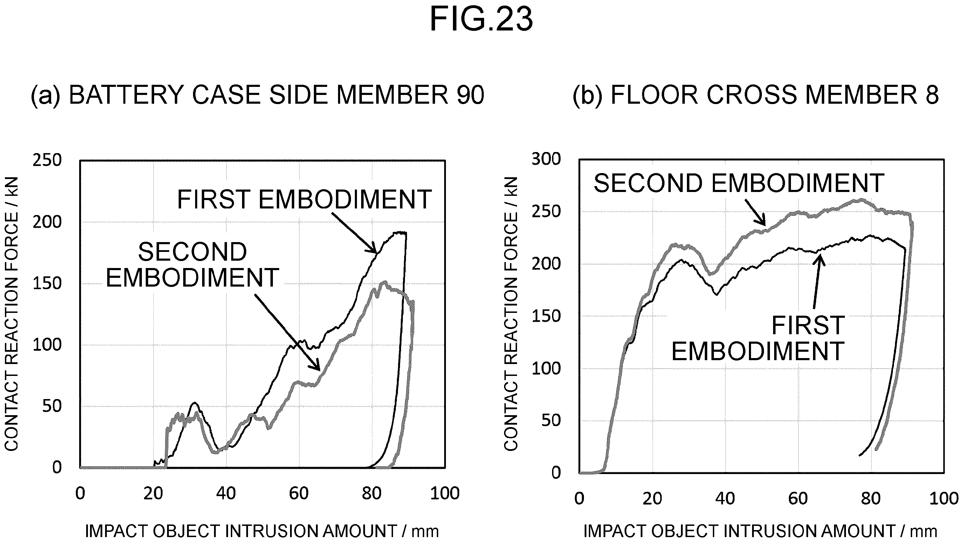

When an impact load is input to the battery case 9 side and the floor cross member 8 side as illustrated in FIG. 22 at the time of side pole impact against the side sill of the second embodiment, a contact reaction force generated in the battery case side member 90 and a contact reaction force generated in the floor cross member 8 in the impact process were obtained. In addition, a similar contact reaction force was obtained for the first embodiment. FIG. 23(a) illustrates a contact reaction force generated in the battery case side member 90, and FIG. 23(b) illustrates a contact reaction force generated in the floor cross member 8. As illustrated in FIG. 23(a), the contact reaction force generated in the battery case side member 90 in the second embodiment rises slower than that in the first embodiment, and is 210 lower than that in the first embodiment in the second embodiment (the second embodiment: 155 kN, the first embodiment: 195 kN). On the other hand, as illustrated in FIG. 23(b), the contact reaction force generated in the floor cross member 8 in the second embodiment rises faster than that in the first embodiment, and is 15% higher than that in the first embodiment (the second embodiment: 261 kN, the first embodiment: 227 kN). The result of FIG. 23 indicates that the effect of reducing the input load to the battery case can be obtained in the second embodiment.

That is, at the time of side impact in which an impact load is input to the side sill 1 from the outside of the vehicle in the vehicle width direction, the side sill of the second embodiment can obtain the following functions and effects. A hollow space s between the outer side portion and the battery case side member 90 in the vehicle width direction is provided in the lower portion of the impact absorbing structure A of the second embodiment (that is, in the vehicle width direction, the hollow space s and the lower portion of the outer side portion of the impact absorbing structure A are located on the horizontal extension of the battery case side member 90). Therefore, the rise of the contact reaction force generated in the battery case side member 90 can be delayed. On the other hand, in the upper portion of the impact absorbing structure A of the second embodiment, the inner side portion and the outer side portion face each other with the partition member 2 interposed therebetween, and are aligned with the floor cross member 8 in the vehicle width direction via the side sill 1 (that is, positioned on the horizontal extension of the floor cross member 8 in the vehicle width direction). Therefore, a load transfer path for directly transmitting the crashworthiness load input to the side sill 1 to the floor cross member 8 is formed, and the contact reaction force generated in the floor cross member 8 rises quickly. Then, due to the contact reaction force generated in the floor cross member 8, the upper side, particularly the outer side portion, of the impact absorbing structure A positioned on the horizontal extension of the floor cross member 8 via the side sill 1 in the vehicle width direction is first efficiently crushed (see FIG. 20(a)) to absorb the side crashworthiness load. Thereafter, after the side impact progresses and the side sill 1 (the upper side of the impact absorbing structure A) is deformed, the contact reaction force generated in the battery case side member 90 starts to increase, so that the peak load input to the battery case 9 is reduced, and the deformation of the battery case 9 can also be suppressed.

### <Function and Effect of Impact Absorbing Structure A in Side Sill of FIG. 15>

Of the side sills of the lower structure of automotive body of the present invention, the embodiment having the basic structure as illustrated in FIG. 1 is referred to as "the first embodiment", the embodiment having the structure illustrated in FIG. 15 is referred to as "the third embodiment", and the results of comparing and examining the functions and effects of "the third embodiment" with "the first embodiment" will be described below. In each of the test bodies, the bulkhead 6 was arranged as illustrated in FIG. 9(a). The following results are similar in a case where the embodiment in which the recessed portion c is formed in the outer side portion is referred to as "third embodiment", and "inner side" and "outer side" in the description are only required to be understood in reverse.

### · Absorbed Energy

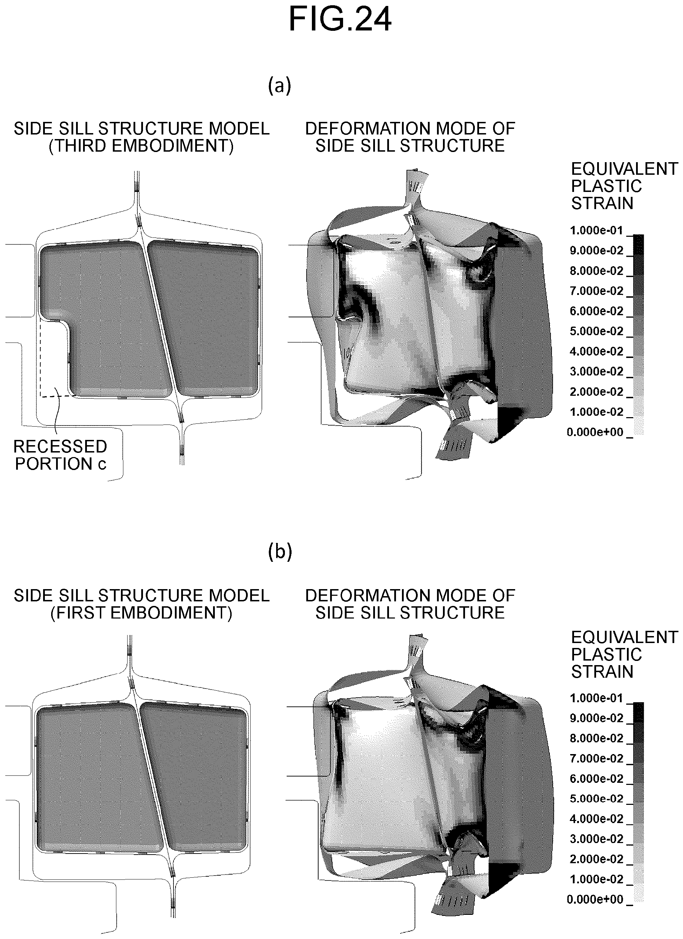

FIGS. 24(a) and 24(b) illustrate the side sills of the third embodiment and the first embodiment (the same embodiment as that of FIG. 20(b)) in comparison of deformation modes and strain distributions at the time of side impact. FIG. 24(a) illustrates the third embodiment, and FIG. 24(b) illustrates the first embodiment. Comparing the third embodiment of FIG. 24(a) with the first embodiment of FIG. 24(b), the areas of the buckling region of the bulkhead 6 and the region where the strain is 0.09 or more (dark color region) are at an equivalent level.

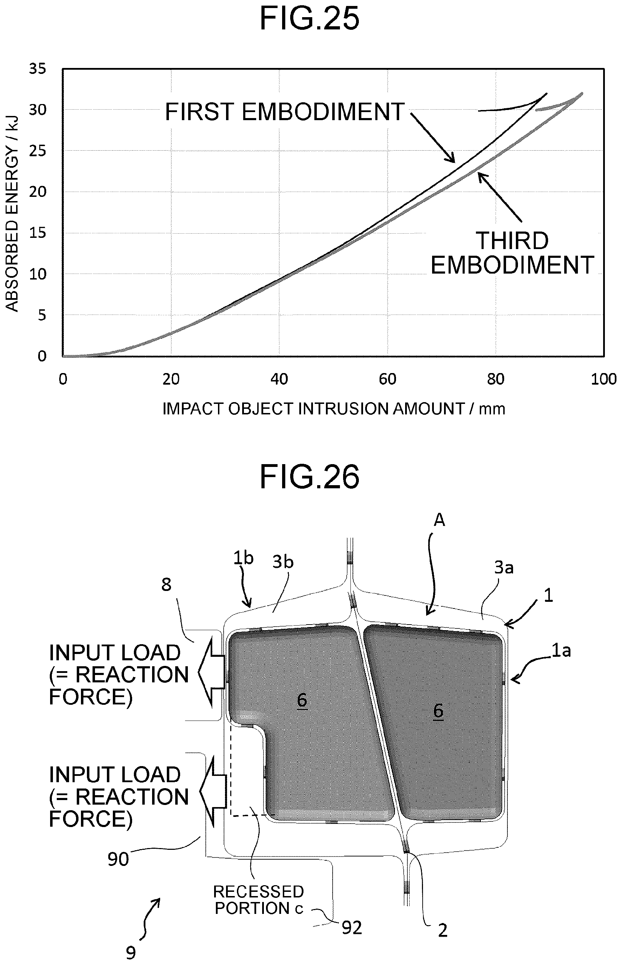

FIG. 25 illustrates a comparison of the relationship between the impact object (pole) intrusion amount and the absorbed energy when the side pole test is performed on the side sill of the third embodiment and the side sill of the first embodiment under the condition of FIGS. 18 and the side pole test is deformed at the time of the side pole impact. According to this, although the impact object intrusion amount of the third embodiment is slightly longer (96 mm in the third embodiment, 89 mm in the first embodiment), all absorbed energies are 32.0 kJ, and it is illustrated that the third embodiment has crash worthiness at an equivalent level to the first embodiment. This is because, in the third embodiment, the buckling induction effect of the bulkhead by the specific structure (recessed portion c in FIG. 15) as described above is obtained, so that the impact energy absorption property is maintained at a high level without being deteriorated as compared with the first embodiment (structure in FIG. 1).

### · Effect of Reducing Input Load to Battery Case

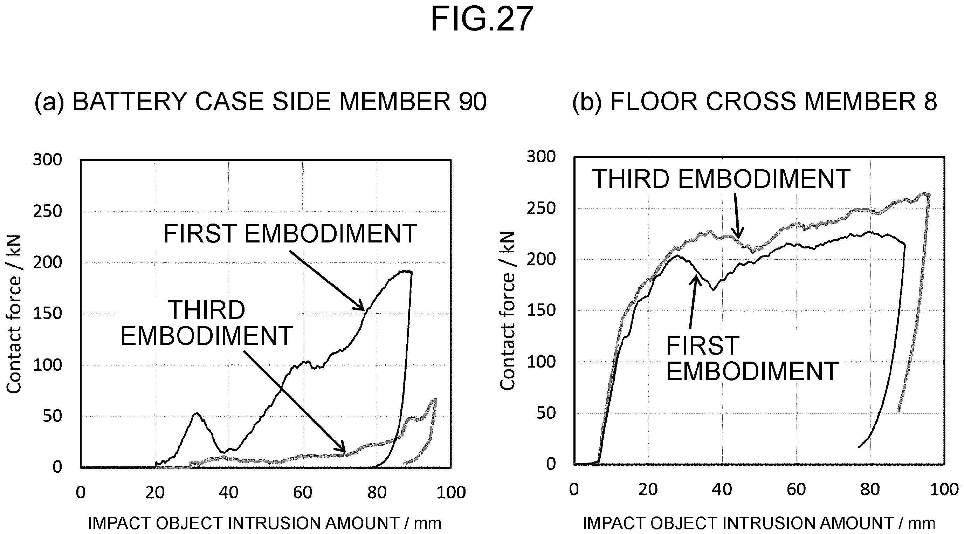

When an impact load is input to the battery case 9 side and the floor cross member 8 side as illustrated in FIG. 26 at the time of side pole impact against the side sill of the third embodiment, a contact reaction force generated in the battery case side member 90 and a contact reaction force generated in the floor cross member 8 in the impact process were obtained. In addition, a similar contact reaction force was obtained for the first embodiment. FIG. 27(a) illustrates a contact reaction force generated in the battery case side member 90, and FIG. 27(b) illustrates a contact reaction force generated in the floor cross member 8. As illustrated in FIG. 27(a), the contact reaction force generated in the battery case side member 90 in the third embodiment rises slower than that in the first embodiment, and is 66% lower than that in the first embodiment in the third embodiment (the third embodiment: 67 kN, the first embodiment: 195 kN). On the other hand, as illustrated in FIG. 27(b), although the contact reaction force generated in the floor cross member 8 in the third embodiment is 16% higher than that in the first embodiment (the third embodiment: 264 kN, the first embodiment: 227 kN), the contact reaction force is almost the same up to the impact object intrusion amount of about 80 mm. The result of FIG. 27 indicates that the effect of reducing the input load to the battery case can be obtained in the third embodiment.

That is, at the time of side impact in which an impact load is input to the side sill 1 from the outside of the vehicle in the vehicle width direction, the side sill of the third embodiment can obtain the following functions and effects. Since the recessed portion c is provided in the inner side portion of the lower portion of the impact absorbing structure A of the third embodiment, the rise of the contact reaction force generated in the battery case side member 90 can be delayed. Further, the corner R portion g of the notch of the bulkhead 6 corresponding to the recessed portion c is buckled and bent, and buckling is also induced in the peripheral portion of the corner R portion g to continue absorbing the crashworthiness load. As a result, even if the side sill 1 is deformed as the side impact progresses, the contact reaction force generated in the battery case side member 90 can be kept low, and the load input to the battery case 9 can be greatly reduced. Therefore, deformation of the battery case 9 can be suppressed.

### [Examples]

In order to confirm the effect of the side sill structure in the lower structure of automotive body of the present invention, an impact test by the following FEM analysis was performed.

### [First Example]

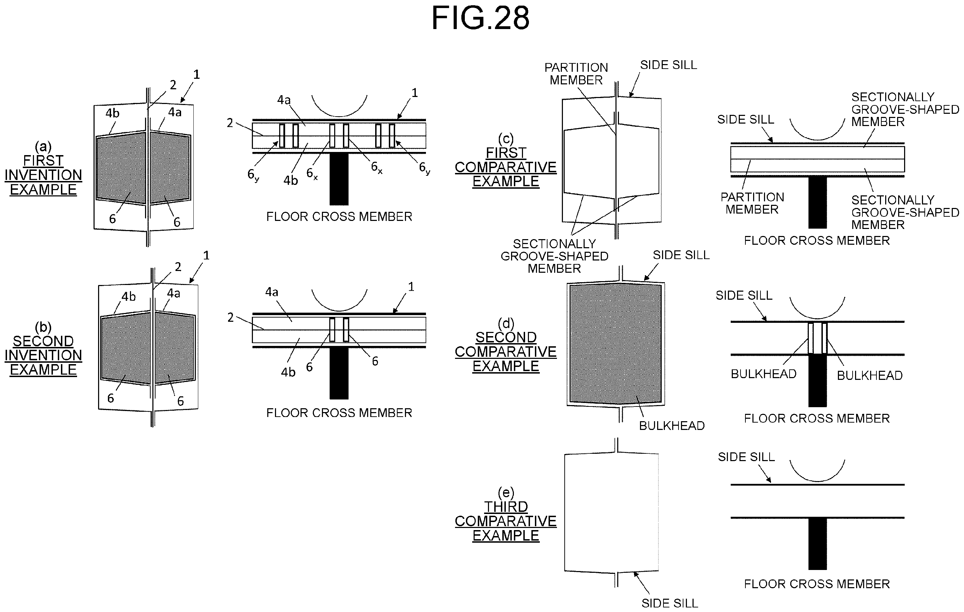

FIGS. 28(a) to 28(e) illustrate test bodies and test conditions of the invention examples and comparative examples. In each of FIGS. 28(a) to 28(e), the left diagram is a cross-sectional view of the side sill in the vehicle width direction, and the right diagram is a horizontal cross-sectional view of the side sill, and illustrates an impact position of the impact object (pole) with the side sill and a position of the floor cross member. In this impact test, a side sill and an impact absorption member (the impact absorbing structure A in the invention example) of the vehicle side structure were used as test bodies, and impact energy absorption property were evaluated. In addition, the floor cross member and the battery case side member adjacent to the side sill were used as a rigid jig for fixing the test body, and the load transferred to the jig was evaluated by the contact reaction force.

In the impact test, as illustrated in FIG. 28, an impact object (pole) having a curvature radius R of 127 mm was caused to collide perpendicularly to the longitudinal direction of the test body at an initial speed of 30.9 km/h and a maximum intrusion amount of 100 mm. The impact energy at this time was 32 kJ. The fixing jig of the side sill on the opposite side of the impact object includes a floor cross member simulation portion (corresponding to the floor cross member 8) simulating the lower structure of automotive body illustrated in FIG. 1, a battery case wall portion (corresponding to the battery case side member 90), and a battery case lower portion (corresponding to the battery case bottom plate 91 and the mounting flange portion 92), and the battery case lower portion is fixed to the side sill inner with a fixing bolt (corresponding to the fixing bolt 11). The width wa of the floor cross member simulation portion in the vehicle front-rear direction was 80 mm.

Table 1 illustrates strength levels and sheet thicknesses of steel sheets used for the respective members of the test bodies of the invention examples and the comparative examples.

**Table 1**

| | Strength level | Sheet thickness |
|---|---|---|
| Side sill 1 | 1470MPa-class | 1.6mmt |
| Sectionally groove-shaped members 4a and 4b | 1470M Pa-class | 1.0mmt |
| Partition member 2 | 1470MPa-class | 0.8mmt |
| Bulkhead 6 | 1180MPa-class | 1.6mmt |

In a test body of the first invention example illustrated in FIG. 28(a), in the impact absorbing structure A, a bulkhead 6ₓ is provided at two positions in a region within a width of a floor cross member simulation portion (corresponding to the floor cross member 8), and a bulkhead 6_{y} including a bulkhead set including two or more bulkheads provided adjacent to each other is provided in a region outside the width of the floor cross member simulation portion on both sides of the bulkhead 6ₓ. The interval w1 between two adjacent bulkheads 6ₓ was set to 35 mm, and the ratio w1/wa of the interval w1 to the width wa of the floor cross member was set to 0.44. In addition, the interval w2 between the bulkhead 6ₓ and the bulkhead 6_{y} adjacent thereto is larger than w1 and 254 mm or less, and is 125 mm which is about 1/2 of the assumed installation interval of the floor cross member (interval wb between adjacent floor cross members) of 260 mm. Further, the interval w4 between the bulkheads constituting the bulkhead set as the bulkhead 6_{y} was set to 35 mm which is the same as the interval w1.

The test body of the second invention example illustrated in FIG. 28(b) is obtained by removing the bulkhead 6_{y} of the first invention example, and in the impact absorbing structure A, the bulkhead 6 is provided only at two positions in the region within the width of the floor cross member simulation portion (corresponding to the floor cross member 8). The test body of the first comparative example illustrated in FIG. 28(c) is obtained by removing the bulkhead 6 from the structure of the impact absorbing structure A of the second invention example. In the test body of the second comparative example illustrated in FIG. 28(d), only the bulkhead is provided inside the side sill, and the bulkhead is provided at two positions in the region within the width of the floor cross member simulation portion. The test body of the third comparative example illustrated in FIG. 28(e) was a test body including only the side sill without disposing the partition member and the impact absorption member inside the side sill.

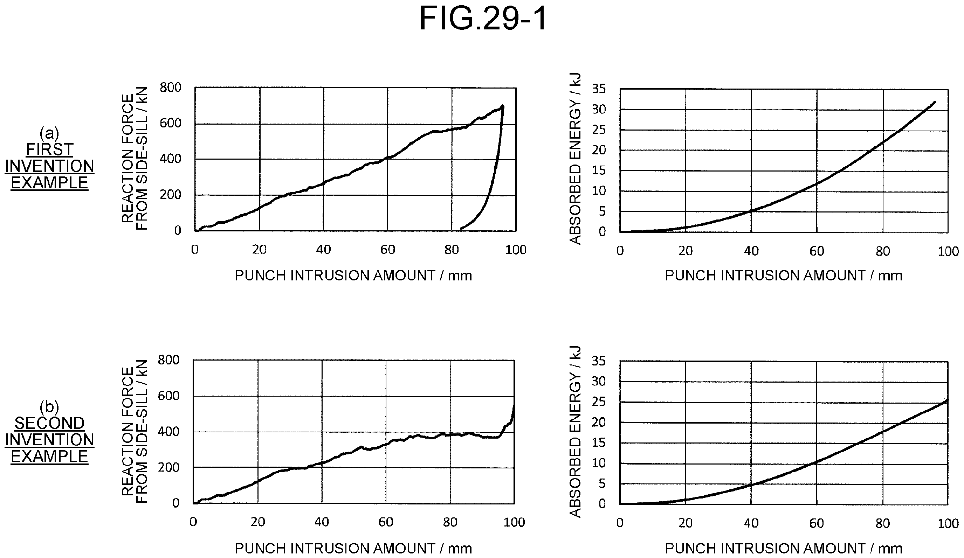

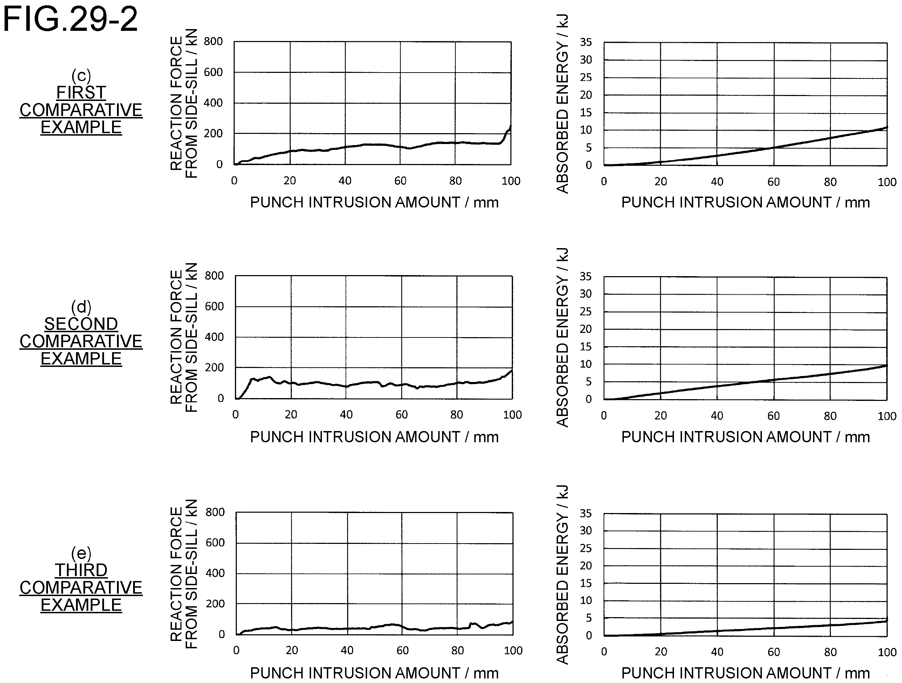

FIGS. 29(a) to 29(e) illustrate the relationship between the impact object (punch) intrusion amount into the side sill at the time of the impact test and the force (reaction force from side-sill) received by the impact object, and the transition of the absorbed energy with respect to the impact object (punch) intrusion amount in the invention example and the comparative example. The punch is a rigid pole that is an impact object in the side pole test (FIGS. 18) described above. In addition, the absorbed energy was calculated by subtracting the kinetic energy calculated from the velocity of the impact object from the impact energy (32 kJ). While the stroke of the impact object was 100 mm at the maximum, in the first invention example illustrated in FIG. 29(a), the impact object stopped before the maximum intrusion amount of the impact object reached 100 mm (96 mm), and the absorbed energy by the side sill structure of the first invention example was 32.0 kJ. On the other hand, in the second invention example and the first to third comparative examples illustrated in FIGS. 29(b) to 29(e), the maximum stroke of the impact object reached 100 mm before the absorbed energy reached 32.0 kJ (absorbed energy of the first invention example).

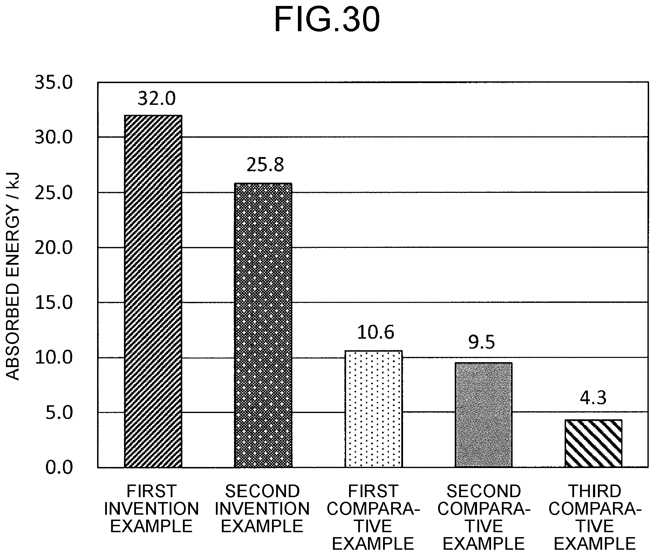

FIG. 30 illustrates comparison of the absorbed energy at the time of maximum penetration of the impact object between the invention example and the comparative example. The maximum intrusion amount was 96 mm in the first invention example, and 100 mm (maximum intrusion amount of the impact object) in both the second invention example and the first to third comparative examples. The absorbed energy of the first invention example was 6.7 times that of the third comparative example in which only the side sill was used, 3.0 times that of the first comparative example in which no bulkhead was used, and 3.4 times that of the second comparative example in which only the bulkhead was used, and about 1.6 times that of the first comparative example and the second comparative example in total 20.1 kJ. In addition, in the second invention example, the number of installed bulkheads in the vehicle front-rear direction is smaller than that in the first invention example. Therefore, although the absorbed energy was reduced (19% reduction) as compared with the first invention example, the absorbed energy was 6.0 times that in the third comparative example, 2.4 times that in the first comparative example, 2.7 times that in the second comparative example, and about 1.3 times that in total of the first comparative example and the second comparative example.

From the results of the first and second invention examples and the first to third comparative examples described above, it was confirmed that in the side sill structure (lower structure of automotive body) of the present invention, extremely excellent crash worthiness exceeding the effect obtained by simply adding the impact energy absorption property of the first comparative example (side sill structure in which partition members are sandwiched and joined from both sides by a pair of sectionally groove-shaped members) and the second comparative example (side sill structure in which a bulkhead is installed in the side sill) were obtained. Furthermore, from the results of the first invention example and the second invention example, it has been confirmed that the crash worthiness is further improved by arranging the plurality of bulkheads not only in the region within the width of the floor cross member but also in other regions in the vehicle front-rear direction.

### [Second Example]

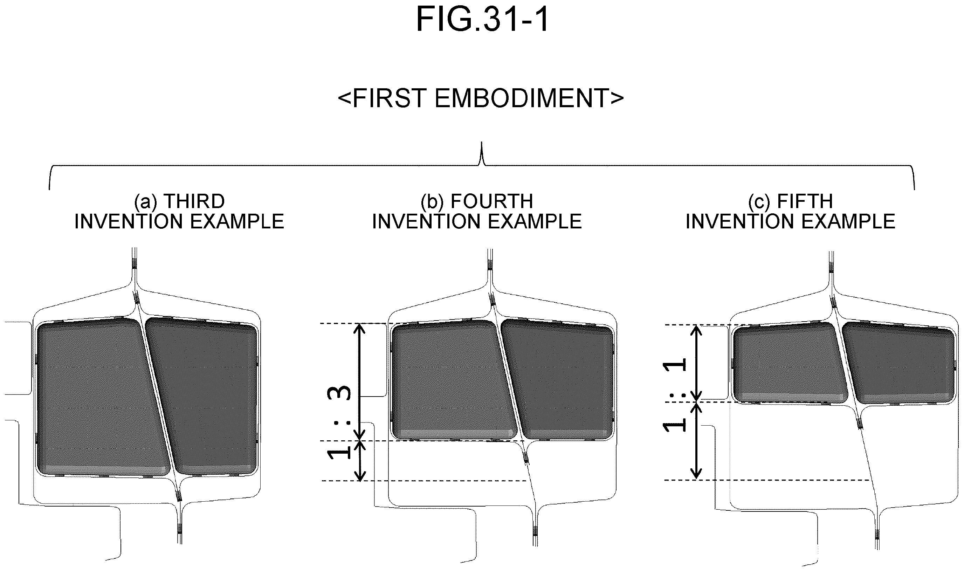

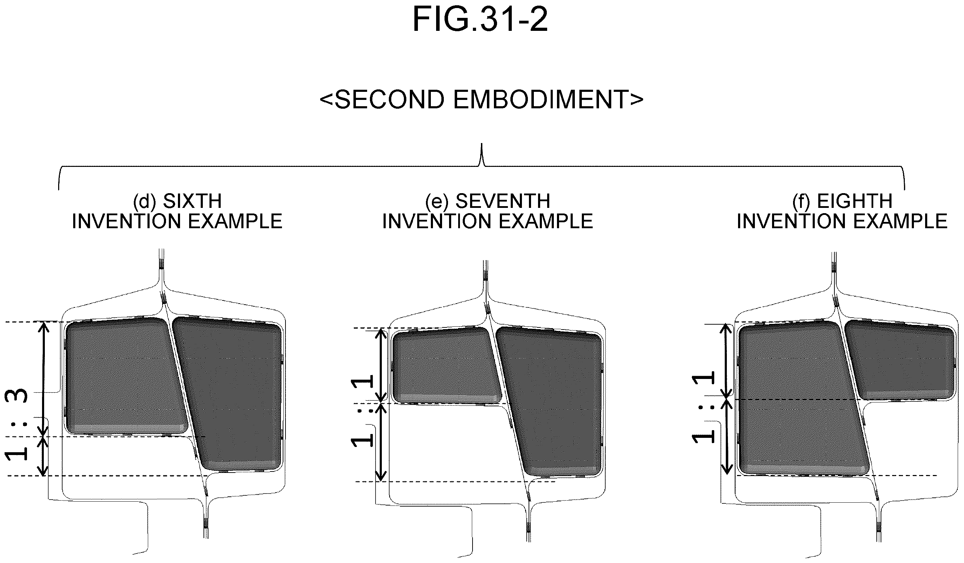

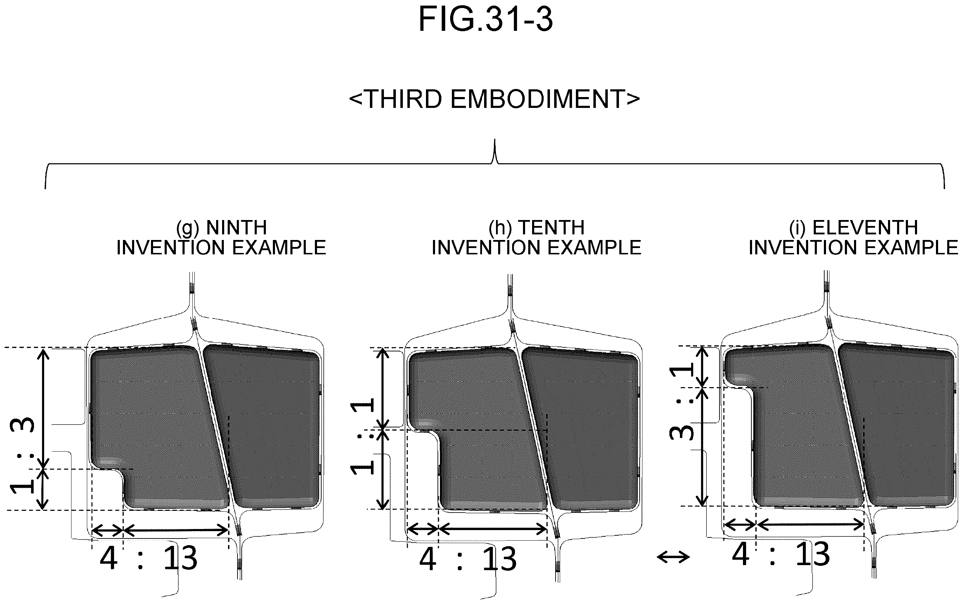

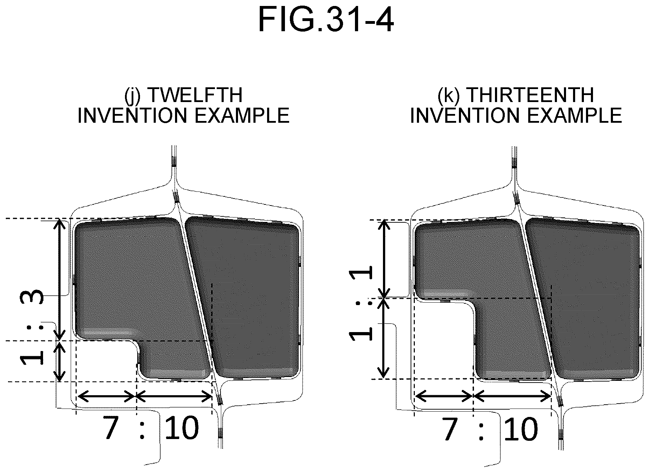

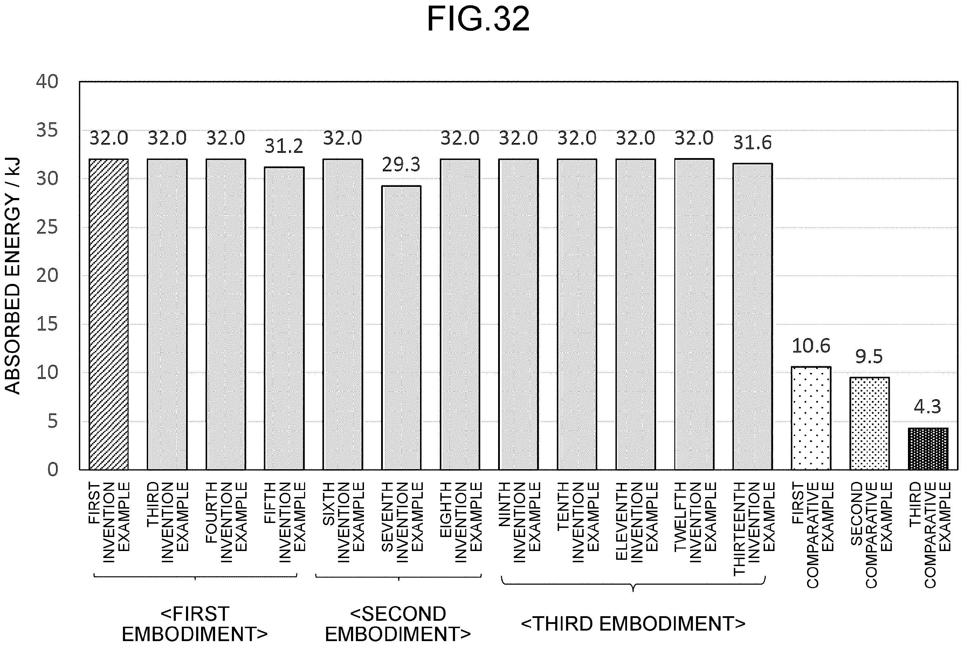

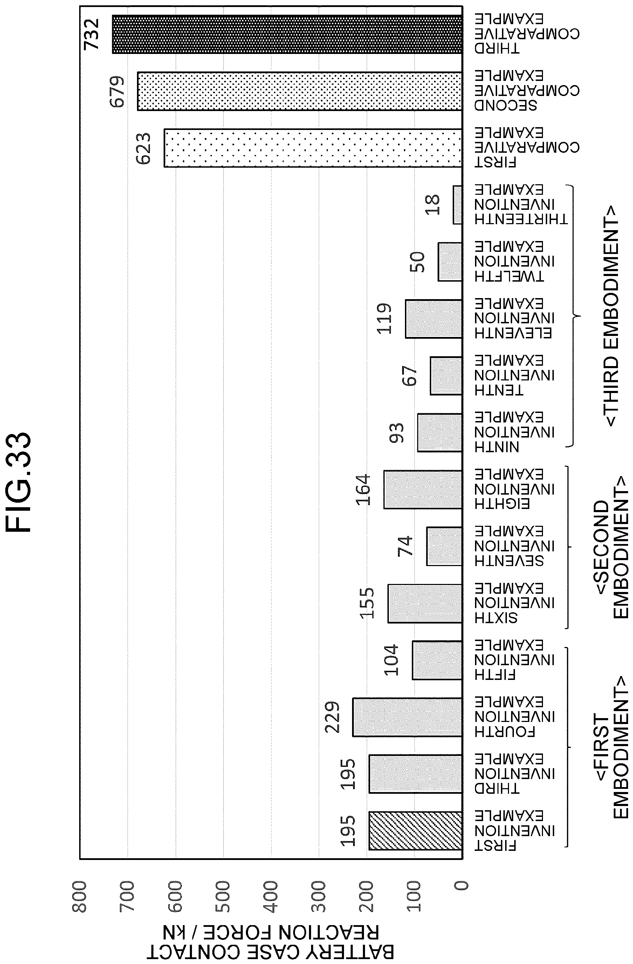

Of the side sills of the lower structure of automotive body of the present invention, the embodiment of the basic structure as illustrated in FIG. 1 was referred to as "the first embodiment", the embodiment having the structure illustrated in FIG. 13(a) was referred to as "the second embodiment", and the embodiment having the structure illustrated in FIG. 15 was referred to as "the third embodiment", and the following impact tests were performed on these. In each of the test bodies, the bulkhead 6 was arranged as illustrated in FIG. 9(a). As the test body, a test body obtained by changing the shape of the longitudinal cross section in the vehicle width direction of the impact absorbing structure A of the test body of [the first example] described above to the shapes illustrated in FIGS. 31(a) to 31(k) (the third to 13th invention examples) was used. The test conditions were the same as those of [the first example], and the impact absorbed energy (FIG. 32) at an impact object intrusion amount (stroke) of 0-100 mm of the impact test body and the contact reaction force (FIG. 33) generated in the battery case side member 90 were evaluated. In the test body of the third to fifth invention examples related to the first embodiment illustrated in FIGS. 31(a) to 31(c), the partition member 2 of the test body of the first invention example in [the first example] is vertical, whereas the partition member 2 is inclined in the vehicle height direction. In addition, in the test bodies of the fourth invention example and the fifth invention example, the height of the impact absorbing structure A was smaller than that of the test body of the third invention example, and was 75% (the fourth invention example, FIG. 31(b)) and 50% (the fifth invention example, FIG. 31(c)) of the height of the third invention example, respectively.

In the test body of the sixth to eighth invention examples related to the second embodiment illustrated in FIGS. 31(d) to 31(f), the height of the inner side portion or the outer side portion of the impact absorbing structure A of the test body of the third invention example is reduced. That is, in the lower portion of the impact absorbing structure A, one of the inner side portion and the outer side portion sandwiching the partition member 2 extends downward from the other. In the test bodies of the sixth invention example and the seventh invention example, the height of the inner side portion of the impact absorbing structure A was smaller than that of the test body of the third invention example, and was 75% (the sixth invention example, FIG. 31(d)) and 50% (the seventh invention example, FIG. 31(e)) of the height of the third invention example, respectively. In addition, in the test body of the eighth invention example, the height of the outer side portion of the impact absorbing structure A was made smaller than that of the test body of the third invention example, and was set to 50% of the height of the third invention example (FIG. 31(f)).

In the test body of the ninth to 13th invention examples related to the third embodiment illustrated in FIGS. 31(g) to 31(k), a recessed portion c is provided in a lower region or a region including a lower portion in the height direction of the inner side portion of the impact absorbing structure A so as to secure a space in the vehicle width direction between the inner side portion of the impact absorbing structure A and the side sill 1 with respect to the test body of the third invention example, the recessed portion c facing the inner surface of the side sill 1. In the test body of the ninth and 11th invention examples, the width (depth) of the recessed portion c in the vehicle width direction was set to 23% of the width of the inner side portion of the impact absorbing structure A in the vehicle width direction, and the height of the recessed portion c was set to 34% to 66% of the height (thickness) of the inner side portion of the impact absorbing structure A in the vehicle height direction. In addition, in the test bodies of the 12th and 13th invention examples, the width (depth) of the recessed portion c in the vehicle width direction was set to 41% of the width of the inner side portion of the impact absorbing structure A in the vehicle width direction, and the height of the recessed portion c was set to 34% and 43% of the height (thickness) of the inner side portion of the impact absorbing structure A in the vehicle height direction.

FIG. 32 illustrates impact absorbed energy in the third to 13th invention examples. For comparison, impact absorbed energy of the first invention example and the first to third comparative examples of [the first example] is also illustrated. From the results of FIG. 32, it was confirmed that all of the third to 13th invention examples had improved crash worthiness as compared with the first to third comparative examples. The average of the first embodiment (the first and third to fifth invention examples) was 31.8 kJ, the average of the second embodiment (the sixth to eighth invention examples) was 31.1 kJ, and the average of the third embodiment (the ninth to 13th invention examples) was 31.9 kJ, and the impact energy absorption amount was at an equivalent level in any embodiment. FIG. 33 illustrates the magnitude of the contact reaction force generated in the battery case side member 90 in the third to 13th invention examples. For comparison, contact reaction forces of the first invention example and the first to third comparative examples of [the first example] are also illustrated. From the results of FIG. 33, it has been confirmed that all of the third to 13th invention examples can significantly reduce the contact reaction force generated in the battery case 9 as compared with the first to third comparative examples. In addition, the average of the first embodiment (the first and third to fifth invention examples) is 181 kN, the average of the second embodiment (the sixth to eighth invention examples) is 131 kN, and the average of the third embodiment (the ninth to 13th invention examples) is 69 kN, and it has been confirmed that the contact reaction force generated in the battery case 9 can be reduced by about 30% in the second embodiment as compared with the first embodiment, and further reduced by 39% or more in the third embodiment as compared with the second embodiment.

### Industrial Applicability

According to the present invention, it is possible to provide a lower structure of automotive body and a side sill structure of an automobile that can obtain high impact energy absorption property with a small impact deformation amount while suppressing an increase in weight due to a structural member in the lower structure of automotive body of an automobile including the side sill. Further, according to the present invention, it is possible to provide a lower structure of automotive body and a side sill structure of an automobile capable of reducing a load input to a battery module by deformation of the side sill.

### Reference Signs List

1 SIDE SILL
1a SIDE SILL OUTER
1b SIDE SILL INNER
2 PARTITION MEMBER
3, 3a, 3b CLOSED SECTIONAL SPACE
4a, 4b SECTIONALLY GROOVE-SHAPED MEMBER
5a, 5b CLOSED SECTIONAL SPACE
6, 6ₓ, 6_{y} BULKHEAD
7 FLOOR PANEL
8 FLOOR CROSS MEMBER
9 BATTERY CASE
10 BATTERY PACK
11 FIXING BOLT
12 JOINT PORTION
13 ADHESIVE
40 VERTICAL SURFACE PORTION
41A, 41B LATERAL SURFACE PORTION
42 FLANGE PORTION
60 BEAD
61 FLANGE PORTION
70 FLANGE PORTION
90 BATTERY CASE SIDE MEMBER
91 BATTERY CASE BOTTOM PLATE
92 MOUNTING FLANGE PORTION
100 VERTICAL SURFACE PORTION
101A, 101B LATERAL SURFACE PORTION
102 FLANGE PORTION
A IMPACT ABSORBING STRUCTURE
e DOWNWARDLY EXTENDING PORTION
c RECESSED PORTION
s HOLLOW SPACE
f, g CORNER R PORTION

## Claims

1. A lower structure of automotive body of an automobile comprising:
side sills (1) arranged on both sides of an automotive body lower portion along a vehicle longitudinal direction;
a floor cross member (8) arranged between the side sills (1) and having both side portions fixed to upper portions of the side sills (1); and
a battery case (9) arranged below the floor cross member (8) and having both side portions facing lower portions of the side sills (1), wherein
each of the side sills (1) includes a partition member (2) that vertically passes a closed sectional space (3) in the side sill (1), and has a structure in which the closed sectional space (3) is partitioned into two closed sectional spaces (3a) and (3b) in a vehicle width direction by the partition member (2),
the side sill (1) further includes an impact absorbing structure (A) including:
a pair of sectionally groove-shaped members (4a) and (4b) joined to the partition member (2) in a state where the partition member (2) is sandwiched from both sides in the closed sectional spaces (3a) and (3b), and forming closed sectional spaces (5a) and (5b) with the partition member (2), respectively; and
bulkheads (6) provided at a plurality of positions spaced apart from each other in a vehicle front-rear direction in the closed sectional spaces (5a) and (5b), each of the bulkheads (6) being provided in each of the closed sectional spaces (5a) and (5b) along the vehicle width direction to partition the closed sectional spaces (5a) and (5b),
in the impact absorbing structure (A), the bulkhead (6) in the closed sectional space (5a) and the bulkhead (6) in the closed sectional space (5b) are provided to face each other in the vehicle width direction with the partition member (2) interposed therebetween, and each bulkhead (6) is joined to at least the sectionally groove-shaped member (4a) or the sectionally groove-shaped member (4b), and
in an upper portion of the impact absorbing structure (A), an inner side portion and an outer side portion face each other across the partition member (2), and are positioned on a horizontal extension of the floor cross member (8) in the vehicle width direction.

2. The lower structure of automotive body of the automobile according to claim 1, wherein each of the bulkheads (6) includes:
bulkheads (6ₓ) provided in a region within a width of the floor cross member in the vehicle front-rear direction; and
a bulkhead (6_{y}) provided in a region outside the width of the floor cross member,
the bulkheads (6ₓ) are provided at least two positions in the region within the width of the floor cross member in the vehicle front-rear direction, and the bulkhead (6_{y}) is provided at least one position in the region outside the width of the floor cross member, and
w1 < w2 is satisfied, where w1 represents an interval between two adjacent bulkheads (6ₓ), and w2 represents an interval between the bulkhead (6ₓ) and the bulkhead (6_{y}) adjacent to the bulkhead (6ₓ).

3. The lower structure of automotive body of the automobile according to claim 2, wherein at least a part of bulkheads (6_{y}) is formed by a bulkhead set constituted by two or more adjacent bulkheads.

4. The lower structure of automotive body of the automobile according to claim 1, wherein each of the bulkheads (6) is joined to the sectionally groove-shaped member (4a) or the sectionally groove-shaped member (4b) and the partition member (2).

5. The lower structure of automotive body of the automobile according to claim 1, wherein in a lower portion of the impact absorbing structure (A), one of the inner side portion and the outer side portion sandwiching the partition member (2) extends downward from another one, and
at least a portion (e) extending in the downward direction in the lower portion of the impact absorbing structure (A) is positioned on a horizontal extension of the battery case (9) in the vehicle width direction.

6. The lower structure of automotive body of the automobile according to claim 1, wherein
the lower portion of the impact absorbing structure (A) is positioned on a horizontal extension of the battery case (9) in the vehicle width direction, and
a recessed portion (c) is formed in one of the inner side portion and the outer side portion with the partition member (2) interposed therebetween in a lower region or a region including the lower portion in a height direction of the impact absorbing structure (A) so as to face the inner surface of the side sill (1).

7. The lower structure of automotive body of the automobile according to any one of claims 1 to 5, wherein a vertical surface portion (40) of each of the sectionally groove-shaped members (4a) and (4b) and a vertical surface portion (100) of the side sill (1) facing the vertical surface portion (40) are any one of:
(i) directly joined or abutted;
(ii) joined or abutted with another member interposed therebetween; and
(iii) opposed to each other with a predetermined gap therebetween without being joined or abutted.

8. The lower structure of automotive body of the automobile according to any one of claims 1 to 6, wherein a metal sheet constituting the impact absorbing structure (A) has a yield strength equal to or less than a yield strength of a metal sheet constituting the floor cross member, and a tensile strength equal to or more than 500 MPa-class.

9. The lower structure of automotive body of the automobile according to claim 7, wherein a metal sheet constituting the impact absorbing structure (A) has a yield strength equal to or less than a yield strength of a metal sheet constituting the floor cross member, and a tensile strength equal to or more than 500 MPa-class.

10. A side sill structure for an automobile, comprising:
a partition member (2) that vertically passes a closed sectional space (3) in a side sill (1), the closed sectional space (3) being partitioned into two closed sectional spaces (3a) and (3b) in a vehicle width direction by the partition member (2), wherein
the side sill structure for the automobile includes an impact absorbing structure (A) including:
a pair of sectionally groove-shaped members (4a) and (4b) joined to the partition member (2) in a state where the partition member (2) is sandwiched from both sides in the closed sectional spaces (3a) and (3b), and forming closed sectional spaces (5a) and (5b) with the partition member (2), respectively; and
bulkheads (6) provided at a plurality of positions spaced apart from each other in a vehicle front-rear direction in the closed sectional spaces (5a) and (5b), each of bulkheads(6) being provided in each of the closed sectional spaces (5a) and (5b) along the vehicle width direction to partition the closed sectional spaces (5a) and (5b), and
in the impact absorbing structure (A), the bulkhead (6) in the closed sectional space (5a) and the bulkhead (6) in the closed sectional space (5b) are provided to face each other in the vehicle width direction with the partition member (2) interposed therebetween, and each bulkhead (6) is joined to at least the sectionally groove-shaped member (4a) or the sectionally groove-shaped member (4b) .

11. The side sill structure for the automobile according to claim 10, wherein each of the bulkheads (6) is joined to the sectionally groove-shaped member (4a) or the sectionally groove-shaped member (4b) and the partition member (2).

12. The side sill structure for the automobile according to claim 10, wherein each of the bulkheads (6) includes:
bulkheads (6ₓ) provided in a region within a width of the floor cross member in the vehicle front-rear direction; and
a bulkhead (6_{y}) provided in a region outside the width of the floor cross member,
the bulkheads (6ₓ) are provided at least two positions in the region within the width of the floor cross member in the vehicle front-rear direction, and the bulkhead (6_{y}) is provided at least one position in the region outside the width of the floor cross member, and
w1 < w2 is satisfied, where w1 represents an interval between two adjacent bulkheads (6ₓ), and w2 represents an interval between the bulkhead (6ₓ) and the bulkhead (6_{y}) adjacent to the bulkhead (6ₓ).

13. The side sill structure for the automobile according to claim 12, wherein at least a part of bulkheads (6_{y}) is formed by a bulkhead set constituted by two or more adjacent bulkheads.

14. The side sill structure for the automobile according to claim 12, wherein the interval w2 is 254 mm or less.

15. The side sill structure for the automobile according to claim 10, wherein a vertical surface portion (40) of each of the sectionally groove-shaped members (4a) and (4b) and a vertical surface portion (100) of the side sill (1) facing the vertical surface portion are any one of:
(i) directly joined or abutted;
(ii) joined or abutted with another member interposed therebetween; and
(iii) opposed to each other with a predetermined gap therebetween without being joined or abutted.

16. The side sill structure for the automobile according to claim 10, wherein a metal sheet constituting the impact absorbing structure (A) has a yield strength equal to or less than a yield strength of a metal sheet constituting the floor cross member, and a tensile strength equal to or more than 500 MPa-class.

17. The side sill structure for the automobile according to claim 10, wherein a bead (60) is formed in the bulkhead (6) .

18. The side sill structure for the automobile according to any one of claims 10 to 17, wherein in the impact absorbing structure (A), one of an inner side portion and an outer side portion sandwiching the partition member (2) extends in a vehicle height direction more than the other.

19. The side sill structure for the automobile according to any one of claims 10 to 17, wherein the impact absorbing structure (A) is formed with a recessed portion (c) facing an inner surface of the side sill (1).
